# EUROPEAN PATENT APPLICATION

(11) **EP 4 807 721 A1**
(43) Date of publication of application: **16.09.2026**
(21) Application number: 24913345.5
(22) Date of filing: 01.11.2024
(51) Int. Cl.: G09G 3/32, G06F 3/01, G06F 3/041, G06F 3/14, G01S 19/52, H04M 1/02, H04W 4/02

(54) **ELECTRONIC DEVICE AND METHOD FOR CHANGING COLOR TEMPERATURE OF SCREEN, AND NON-TRANSITORY COMPUTER-READABLE STORAGE MEDIUM**

(30) Priority: 31.12.2023 KR 20230198149; 17.01.2024 KR 20240007228
(71) Applicant: Samsung Electronics Co., Ltd., Suwon-si, Gyeonggi-do 16677 (KR)
(72) Inventor: KIM, Seungryeol, Suwon-si Gyeonggi-do 16677 (KR); LEE, Eunjin, Suwon-si Gyeonggi-do 16677 (KR); PARK, Kyoungmin, Suwon-si Gyeonggi-do 16677 (KR); KIM, Kwangtai, Suwon-si Gyeonggi-do 16677 (KR); KIM, Donghwy, Suwon-si Gyeonggi-do 16677 (KR); SHIN, Dongheon, Suwon-si Gyeonggi-do 16677 (KR); YEOM, Donghyun, Suwon-si Gyeonggi-do 16677 (KR); LEE, Minwoo, Suwon-si Gyeonggi-do 16677 (KR)
(74) Representative: Gulde & Partner
(86) International application number: PCT/KR2024/017075
(87) International publication number: WO 2025/143508

(57) **Abstract**

This electronic device may comprise: a memory for storing instructions; a sensor; display; and at least one processor. When individually or collectively executed by the at least one processor, the instructions can cause the electronic device to: display a screen having a first color temperature on the display; determine a second color temperature to be changed from the first color temperature according to the data, which is acquired from the sensor and indicates the color temperature of the environment in the vicinity of the electronic device; and compare the second color temperature with third color temperature determined using the use time of the electronic device.

## Description

### [Technical Field]

The following descriptions relate to an electronic device, a method, and a non-transitory computer-readable storage medium for changing a color temperature of a screen.

### [Background Art]

An electronic device may include a display. The display may be used for displaying an image. The display may include a display panel and display driver circuitry. The display driver circuitry may be operably (or operatively) coupled to the display panel. The display driver circuitry may be configured to display, on the display panel, the image obtained from a processor of the electronic device.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

An electronic device is described. The electronic device may include memory storing instructions. The electronic device may include a sensor. The electronic device may include a display. The electronic device may include at least one processor. The instructions, when executed by the at least one processor individually or collectively, may cause the electronic device to display, on the display, a screen having a first color temperature. The instructions, when executed by the at least one processor individually or collectively, may cause the electronic device to determine a second color temperature to be changed from the first color temperature, in accordance with data obtained from the sensor and indicating a color temperature of an environment around the electronic device. The instructions, when executed by the at least one processor individually or collectively, may cause the electronic device to compare the second color temperature with a third color temperature determined using a usage time of day of the electronic device. The instructions, when executed by the at least one processor individually or collectively, may cause the electronic device to change a color temperature of the screen displayed on the display from the first color temperature to the third color temperature, based on the second color temperature being higher than the third color temperature. The instructions, when executed by the at least one processor individually or collectively, may cause the electronic device to change the color temperature of the screen displayed on the display from the first color temperature to the second color temperature, based on the second color temperature being lower than the third color temperature.

A method is provided. The method may be executed in an electronic device with a sensor and a display. The method may include displaying, on the display, a screen having a first color temperature. The method may include determining a second color temperature to be changed from the first color temperature, in accordance with data obtained from the sensor and indicating a color temperature of an environment around the electronic device. The method may include comparing the second color temperature with a third color temperature determined using a usage time of day of the electronic device. The method may include changing a color temperature of the screen displayed on the display from the first color temperature to the third color temperature, based on the second color temperature being higher than the third color temperature. The method may include changing the color temperature of the screen displayed on the display from the first color temperature to the second color temperature, based on the second color temperature being lower than the third color temperature.

A non-transitory computer-readable storage medium is provided. The non-transitory computer-readable storage medium may store one or more programs. The one or more programs may include instructions that, when executed by an electronic device with a sensor and a display, cause the electronic device to display, on the display, a screen having a first color temperature. The one or more programs may include instructions that, when executed by the electronic device, cause the electronic device to determine a second color temperature to be changed from the first color temperature, in accordance with data obtained from the sensor and indicating a color temperature of an environment around the electronic device. The one or more programs may include instructions that, when executed by the electronic device, cause the electronic device to compare the second color temperature with a third color temperature determined using a usage time of day of the electronic device. The one or more programs may include instructions that, when executed by the electronic device, cause the electronic device to change a color temperature of the screen displayed on the display from the first color temperature to the third color temperature, based on the second color temperature being higher than the third color temperature. The one or more programs may include instructions that, when executed by the electronic device, cause the electronic device to change the color temperature of the screen displayed on the display from the first color temperature to the second color temperature, based on the second color temperature being lower than the third color temperature.

An electronic device is described. The electronic device may include memory storing instructions. The electronic device may include a sensor configured to obtain data indicating a color temperature of an environment around the electronic device. The electronic device may include an acceleration sensor. The electronic device may include a display. The electronic device may include at least one processor. The instructions, when executed by the at least one processor individually or collectively, may cause the electronic device to display, on the display, a screen having a first color temperature. The instructions, when executed by the at least one processor individually or collectively, may cause the electronic device to recognize a moving speed of the electronic device using the acceleration sensor. The instructions, when executed by the at least one processor individually or collectively, may cause the electronic device to maintain a color temperature of the screen at the first color temperature, based on the moving speed being faster than a reference speed. The instructions, when executed by the at least one processor individually or collectively, may cause the electronic device to change the color temperature of the screen from the first color temperature to a second color temperature determined in accordance with the data, based on the moving speed being slower than the reference speed.

A method is described. The method may be executed in an electronic device with a sensor configured to obtain data indicating a color temperature of an environment around the electronic device, an acceleration sensor, and a display. The method may include displaying, on the display, a screen having a first color temperature. The method may include recognizing a moving speed of the electronic device using the acceleration sensor. The method may include maintaining a color temperature of the screen at the first color temperature, based on the moving speed being faster than a reference speed. The method may include changing the color temperature of the screen from the first color temperature to a second color temperature determined in accordance with the data, based on the moving speed being slower than the reference speed.

A non-transitory computer-readable storage medium is provided. The non-transitory computer-readable storage medium may store one or more programs. The one or more programs may include instructions that, when executed by an electronic device with a sensor configured to obtain data indicating a color temperature of an environment around the electronic device, an acceleration sensor, and a display, cause the electronic device to display, on the display, a screen having a first color temperature. The one or more programs may include instructions that, when executed by the electronic device, cause the electronic device to recognize a moving speed of the electronic device using the acceleration sensor. The one or more programs may include instructions that, when executed by the electronic device, cause the electronic device to maintain a color temperature of the screen at the first color temperature, based on the moving speed being faster than a reference speed. The one or more programs may include instructions that, when executed by the electronic device, cause the electronic device to change the color temperature of the screen from the first color temperature to a second color temperature determined in accordance with the data, based on the moving speed being slower than the reference speed.

An electronic device is described. The electronic device may include memory storing instructions. The electronic device may include a sensor. The electronic device may include a display. The electronic device may include at least one processor. The instructions, when executed by the at least one processor individually or collectively, may cause the electronic device to activate a function of adaptively changing a color temperature of a screen displayed on the display, in accordance with data obtained from the sensor and indicating a color temperature of an environment around the electronic device, while displaying, on the display, a first screen from a first software application stored in the memory. The instructions, when executed by the at least one processor individually or collectively, may cause the electronic device to detect an event for displaying, on the display, a second screen from a second software application stored in the memory. The instructions, when executed by the at least one processor individually or collectively, may cause the electronic device to change the screen displayed on the display from the first screen to the second screen, based on the event. The instructions, when executed by the at least one processor individually or collectively, may cause the electronic device to deactivate the function, while displaying the second screen on the display.

A method is described. The method may be executed in an electronic device with a sensor and a display. The method may include activating a function of adaptively changing a color temperature of a screen displayed on the display, in accordance with data obtained from the sensor and indicating a color temperature of an environment around the electronic device, while displaying, on the display, a first screen from a first software application stored in memory of the electronic device. The method may include detecting an event for displaying, on the display, a second screen from a second software application stored in the memory. The method may include changing the screen displayed on the display from the first screen to the second screen, based on the event. The method may include deactivating the function, while displaying the second screen on the display.

A non-transitory computer-readable storage medium is described. The non-transitory computer-readable storage medium may store one or more programs. The one or more programs may include instructions that, when executed in an electronic device with a sensor and a display, cause the electronic device to activate a function of adaptively changing a color temperature of a screen displayed on the display, in accordance with data obtained from the sensor and indicating a color temperature of an environment around the electronic device, while displaying, on the display, a first screen from a first software application. The one or more programs may include instructions that, when executed by the electronic device, cause the electronic device to detect an event for displaying, on the display, a second screen from a second software application. The one or more programs may include instructions that, when executed by the electronic device, cause the electronic device to change the screen displayed on the display from the first screen to the second screen, based on the event. The one or more programs may include instructions that, when executed by the electronic device, cause the electronic device to deactivate the function, while displaying the second screen on the display.

An electronic device is described. The electronic device may include memory storing instructions. The electronic device may include communication circuitry. The electronic device may include a display. The electronic device may include at least one processor. The instructions, when executed by the at least one processor individually or collectively, may cause the electronic device to display, on the display, a screen having a first color temperature. The instructions, when executed by the at least one processor individually or collectively, may cause the electronic device to, based on a user account of the electronic device, discover an external electronic device in conjunction with the electronic device through the communication circuitry, while displaying the screen having the first color temperature. The instructions, when executed by the at least one processor individually or collectively, may cause the electronic device to request, to the external electronic device through the communication circuitry, a color temperature of an environment around the external electronic device, based on the discovery the external electronic device. The instructions, when executed by the at least one processor individually or collectively, may cause the electronic device to receive, through the communication circuitry, data transmitted from the external electronic device in response to the request and indicating the color temperature of the environment around the external electronic device. The instructions, when executed by the at least one processor individually or collectively, may cause the electronic device to determine a second color temperature to be changed from the first color temperature, in accordance with the data. The instructions, when executed by the at least one processor individually or collectively, may cause the electronic device to change a color temperature of the screen displayed on the display from the first color temperature to the second color temperature.

A method is described. The method may be executed in an electronic device with communication circuitry and a display. The method may include displaying, on the display, a screen having a first color temperature. The method may include, based on a user account of the electronic device, discovering an external electronic device in conjunction with the electronic device through the communication circuitry, while displaying the screen having the first color temperature. The method may include requesting, to the external electronic device through the communication circuitry, a color temperature of an environment around the external electronic device, based on the discovery of the external electronic device. The method may include receiving, through the communication circuitry, data transmitted from the external electronic device in response to the request and indicating the color temperature of the environment around the external electronic device. The method may include determining a second color temperature to be changed from the first color temperature, in accordance with the data. The method may include changing a color temperature of the screen displayed on the display from the first color temperature to the second color temperature.

A non-transitory computer-readable storage medium is described. The non-transitory computer-readable storage medium may store one or more programs. The one or more programs may store instructions that, when executed by an electronic device with communication circuitry and a display, cause the electronic device to display, on the display, a screen having a first color temperature. The one or more programs may store instructions that, when executed by the electronic device, cause the electronic device to, based on a user account of the electronic device, discover an external electronic device in conjunction with the electronic device through the communication circuitry, while displaying the screen having the first color temperature. The one or more programs may store instructions that, when executed by the electronic device, cause the electronic device to request, to the external electronic device through the communication circuitry, a color temperature of an environment around the external electronic device, based on the discovery of the external electronic device. The one or more programs may store instructions that, when executed by the electronic device, cause the electronic device to receive, through the communication circuitry, data transmitted from the external electronic device in response to the request and indicating the color temperature of the environment around the external electronic device. The one or more programs may store instructions that, when executed by the electronic device, cause the electronic device to determine a second color temperature to be changed from the first color temperature, in accordance with the data. The one or more programs may store instructions that, when executed by the electronic device, cause the electronic device to change a color temperature of the screen displayed on the display from the first color temperature to the second color temperature.

An electronic device is described. The electronic device may include memory storing instructions. The electronic device may include a display. The electronic device may include at least one processor. The instructions, when executed by the at least one processor individually or collectively, may cause the electronic device to display, on the display, a screen in accordance with a function for eye comfort. The instructions, when executed by the at least one processor individually or collectively, may cause the electronic device to receive an input indicating to deactivate the function applied to a portion of the screen displayed on the display. The instructions, when executed by the at least one processor individually or collectively, may cause the electronic device to change a color temperature of the portion of the screen and maintain a color temperature of a remaining portion of the screen, based on the input.

A method is described. The method may be executed in an electronic device with a display. The method may include displaying, on the display, a screen in accordance with a function for eye comfort. The method may include receiving an input indicating to deactivate the function applied to a portion of the screen displayed on the display. The method may include changing a color temperature of the portion of the screen and maintaining a color temperature of a remaining portion of the screen, based on the input.

A non-transitory computer-readable storage medium is described. The non-transitory computer-readable storage medium may store one or more programs. The one or more programs may include instructions that, when executed by an electronic device with a display, cause the electronic device to display, on the display, a screen in accordance with a function for eye comfort. The one or more programs may include instructions that, when executed by the electronic device, cause the electronic device to receive an input indicating to deactivate the function applied to a portion of the screen displayed on the display. The one or more programs may include instructions that, when executed by the electronic device, cause the electronic device to change a color temperature of the portion of the screen and maintain a color temperature of a remaining portion of the screen, based on the input.

An electronic device is described. The electronic device may include memory storing instructions. The electronic device may include communication circuitry. The electronic device may include a display. The electronic device may include at least one processor. The instructions, when executed by the at least one processor individually or collectively, may cause the electronic device to obtain information on a sunrise time and information on a sunset time using a location of the electronic device determined through the communication circuitry, in accordance with a function for eye comfort. The instructions, when executed by the at least one processor individually or collectively, may cause the electronic device to change a color temperature of a screen displayed on the display over time, within a time interval from the sunset time to the sunrise time.

A method is described. The method may be executed in an electronic device with communication circuitry and a display. The method may include obtaining information on a sunrise time and information on a sunset time using a location of the electronic device determined through the communication circuitry, in accordance with a function for eye comfort. The method may include changing a color temperature of a screen displayed on the display over time, within a time interval from the sunset time to the sunrise time.

A non-transitory computer-readable storage medium is described. The non-transitory computer-readable storage medium may store one or more programs. The one or more programs may include instructions that, when executed by an electronic device with communication circuitry and a display, cause the electronic device to obtain information on a sunrise time and information on a sunset time using a location of the electronic device determined through the communication circuitry, in accordance with a function for eye comfort. The one or more programs may include instructions that, when executed by the electronic device, cause the electronic device to change a color temperature of a screen displayed on the display over time, within a time interval from the sunset time to the sunrise time.

An electronic device is described. The electronic device may include memory storing instructions in the housing. The electronic device may include a display visible from a front side of the electronic device. The electronic device may include a first sensor facing a first direction toward which the display faces and visible from the front side of the electronic device. The electronic device may include a second sensor facing a second direction opposite to the first direction and visible from a rear side of the electronic device. The electronic device may include at least one processor. The instructions, when executed by the at least one processor individually or collectively, may cause the electronic device to obtain first data regarding ambient light around the electronic device using the first sensor. The instructions, when executed by the at least one processor individually or collectively, may cause the electronic device to obtain second data regarding ambient light around the electronic device using the second sensor. The instructions, when executed by the at least one processor individually or collectively, may cause the electronic device to obtain third data regarding light emitted from the display according to displaying a screen on the display. The instructions, when executed by the at least one processor individually or collectively, may cause the electronic device to provide a color temperature of the screen as a first color temperature determined by processing the first data, the second data, and the third data using first reference data stored in the memory. The instructions, when executed by the at least one processor individually or collectively, may cause the electronic device to, based on identifying that a reference time has elapsed from providing the color temperature as the first color temperature, provide the color temperature as a second color temperature determined by processing the first data, the second data, and the third data using second reference data stored in the memory. The first reference data and the second reference data may respectively include information on weights applied to each of the first data, the second data, and the third data.

A method is described. The method may be executed in an electronic device with a display visible from a front side of the electronic device, a first sensor facing a first direction toward which the display faces and visible from the front side of the electronic device, and a second sensor facing a second direction opposite to the first direction and visible from a rear side of the electronic device. The method may include obtaining first data regarding ambient light around the electronic device using the first sensor. The method may include obtaining second data regarding ambient light around the electronic device using the second sensor. The method may include obtaining third data regarding light emitted from the display according to displaying a screen on the display. The method may include providing a color temperature of the screen as a first color temperature determined by processing the first data, the second data, and the third data using first reference data stored in memory of the electronic device. The method may include, based on identifying that a reference time has elapsed from providing the color temperature as the first color temperature, providing the color temperature as a second color temperature determined by processing the first data, the second data, and the third data using second reference data stored in the memory. The first reference data and the second reference data may respectively include information on weights applied to each of the first data, the second data, and the third data.

A non-transitory computer-readable storage medium is described. The non-transitory computer-readable storage medium may store one or more programs. The one or more programs may include instructions that, when executed by an electronic device with a display visible from a front side of the electronic device, a first sensor facing a first direction toward which the display faces and visible from the front side of the electronic device, and a second sensor facing a second direction opposite to the first direction and visible from a rear side of the electronic device, cause the electronic device to obtain first data regarding ambient light around the electronic device using the first sensor. The one or more programs may include instructions that, when executed by the electronic device, cause the electronic device to obtain second data regarding ambient light around the electronic device using the second sensor. The one or more programs may include instructions that, when executed by the electronic device, cause the electronic device to obtain third data regarding light emitted from the display according to displaying a screen on the display. The one or more programs may include instructions that, when executed by the electronic device, cause the electronic device to provide a color temperature of the screen as a first color temperature determined by processing the first data, the second data, and the third data using first reference data stored in memory. The one or more programs may include instructions that, when executed by the electronic device, cause the electronic device to, based on identifying that a reference time has elapsed from providing the color temperature as the first color temperature, provide the color temperature as a second color temperature determined by processing the first data, the second data, and the third data using second reference data stored in the memory. The first reference data and the second reference data may respectively include information on weights applied to each of the first data, the second data, and the third data.

### [Description of the Drawings]

FIG. 1 illustrates an example of changing a color temperature of a screen displayed on a display of an electronic device according to a change in a color temperature of an environment around the electronic device.
FIG. 2 is a simplified block diagram of an exemplary electronic device.
FIG. 3 illustrates an exemplary electronic device including a sensor and a display.
FIG. 4 is a flowchart illustrating an exemplary method executed in an electronic device for determining a color temperature of a screen by comparing a color temperature determined according to a first function with a color temperature determined according to a second function.
FIG. 5 is a flowchart illustrating an exemplary method executed in an electronic device for determining a color temperature of a screen by comparing a moving speed of the electronic device with a reference speed.
FIG. 6 is a flowchart illustrating an exemplary method executed in an electronic device for activating or deactivating a function related to a color temperature according to a type of a software application.
FIG. 7 is a flowchart illustrating an exemplary method executed in an electronic device for determining a color temperature of a screen using communication with an external electronic device.
FIG. 8 is a flowchart illustrating an exemplary method executed in an electronic device for adaptively executing a request related to determining a color temperature according to a reception strength of a signal.
FIG. 9 is a flowchart illustrating an exemplary method executed in an electronic device for changing a color temperature of a portion of a screen and maintaining a color temperature of another portion of the screen.
FIG. 10 illustrates an example of a screen for changing a color temperature of a portion and maintaining a color temperature of another portion.
FIG. 11 is a flowchart illustrating an exemplary method executed in an electronic device for changing a color temperature within a time interval from a sunset time to a sunrise time.
FIG. 12 is a flowchart illustrating an exemplary method executed in an electronic device for activating or deactivating using weather information for determining a color temperature according to a location of the electronic device.
FIG. 13 is a flowchart illustrating an exemplary method executed in an electronic device for providing a color temperature of a screen by changing reference data for processing first data, second data, and third data over time.
FIG. 14 illustrates an example of an environment indicated by first data, second data, and third data.
FIG. 15 illustrates an exemplary method executed in an electronic device for determining a color temperature of a screen according to a user setting defined in one or more software applications.
FIG. 16 is a block diagram of an electronic device in a network environment according to various embodiments.
FIG. 17 is a block diagram of a display module according to various embodiments.

### [Mode for Invention]

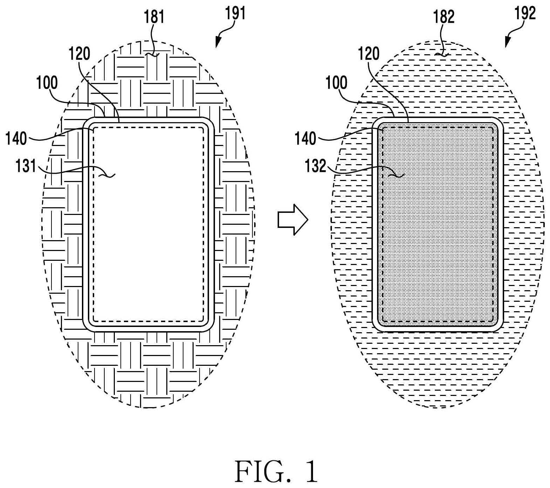

An electronic device may include a display. The display may be used for displaying a screen. For example, since the display is exposed to an environment around the electronic device, a visual quality of the screen may vary according to a change in the environment. For example, the screen may be viewed differently according to a color temperature of the environment. For example, since the screen is viewed differently according to the color temperature of the environment, the electronic device may set a color temperature of the screen according to the color temperature of the environment. For example, the electronic device may change the color temperature of the screen according to a change in the color temperature of the environment. Changing the color temperature of the screen is exemplified in the description of FIG. 1.

FIG. 1 illustrates an example of changing a color temperature of a screen displayed on a display of an electronic device according to a change in a color temperature of an environment around the electronic device.

Referring to FIG. 1, an electronic device 100 may display, on a display 120, a screen 140 having a first color temperature 131, as in a state 191. For example, the first color temperature 131 of the screen 140 may be set, identified, or provided based on a color temperature 181 of an environment around the electronic device 100.

For example, the color temperature of the environment may be changed. For example, the color temperature of the environment may be changed from the color temperature 181 to a color temperature 182 different from the color temperature 181. Maintaining the color temperature of the screen 140 at the first color temperature 131 corresponding to the color temperature 181 in the environment having the color temperature 182 may reduce a visual quality of the screen 140. For example, the electronic device 100 may change the state 191 to a state 192 according to a change from the color temperature 181 to the color temperature 182, for the visual quality of the screen 140. For example, as in the state 192, the electronic device 100 may display, on the display 120, the screen 140 having a second color temperature 132 changed from the first color temperature 131, according to the color temperature 182 changed from the color temperature 181, for the visual quality of the screen 140. For example, the second color temperature 132 of the screen 140 may be set, identified, or provided based on the color temperature 182 of the environment.

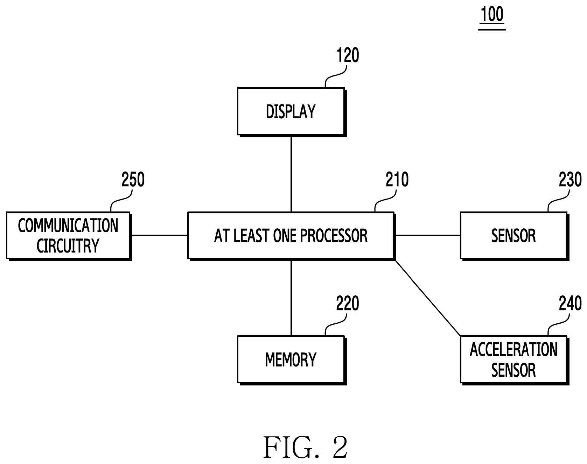

As described above, the electronic device 100 may execute operations for recognizing, identifying, or measuring a change from the color temperature 181 to the color temperature 182 for a change from the first color temperature 131 to the second color temperature 132. The electronic device 100 may include components for the operations. The components are exemplified in the description of FIG. 2.

FIG. 2 is a simplified block diagram of an exemplary electronic device.

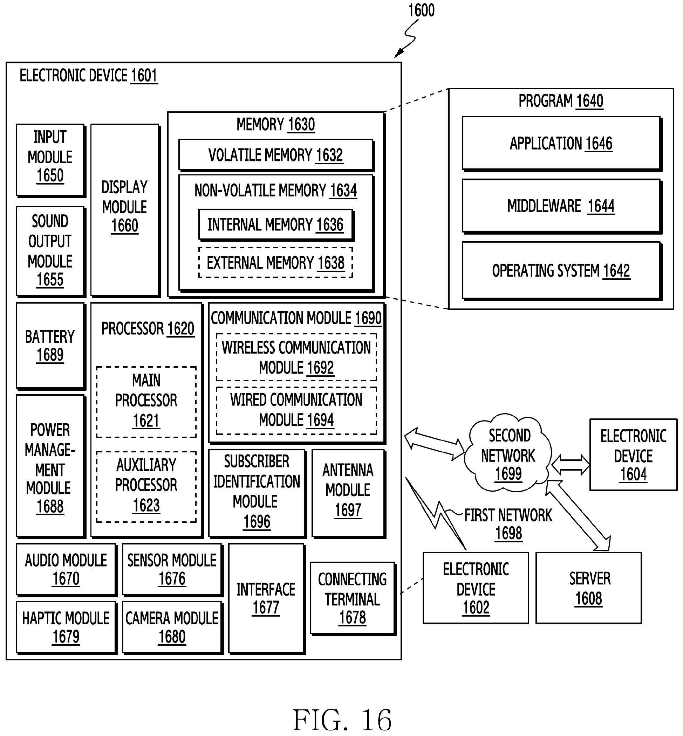

Referring to FIG. 2, the electronic device 100 may include at least a portion of an electronic device 1601 of FIG. 16 or may correspond to at least a portion of the electronic device 1601 of FIG. 16. The electronic device 100 may include a display 120, at least one processor 210, memory 220, a sensor 230, an acceleration sensor 240, and communication circuitry 250. The above-described components (e.g., the display 120, the sensor 230, the acceleration sensor 240, and the communication circuitry 250) are merely exemplary. For example, the electronic device 100 may include other components (e.g., power management integrated circuitry (PMIC), an antenna, or a rechargeable battery). For example, some components may be omitted from the electronic device 100. For example, some components may be integrated into one component.

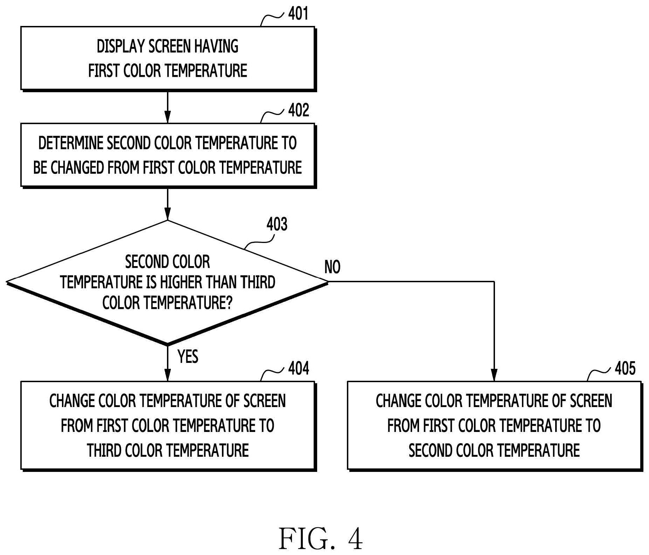

The at least one processor 210 may be used to control at least a portion of the display 120, the memory 220, the sensor 230, the acceleration sensor 240, and the communication circuitry 250. The at least one processor 210 may be configured to cause the electronic device 100 to execute at least a portion of operations exemplified in descriptions of FIGS. 4 to 15 below. For example, the at least one processor 210 may execute at least a portion of the operations exemplified in the descriptions of FIGS. 4 to 15 below, by executing instructions stored in the memory 220.

The at least one processor 210 may be implemented as one or more integrated circuitry (IC) chips, and may execute various data processing. The at least one processor 210 may include at least one electrical circuitry, and may individually or collectively perform distributed processing of instructions (or programs, data, and the like) stored in the memory 220. The at least one processor 210 may include a processor assembly including one or more processing circuitry. The at least one processor 210 may include any processing circuitry operative for controlling execution and operations of one or more components of the electronic device 100.

The at least one processor 210 may include at least a portion of a processor 1620 of FIG. 16 or may correspond to at least a portion of the processor 1520 of FIG. 16. For example, the at least one processor 210 may include a central processing unit (CPU) (or central processing circuitry). For example, the at least one processor 210 may include a graphic processing unit (GPU) (or graphic processing circuitry). For example, the at least one processor 210 may include a neural processing unit (NPU) (or neural processing circuitry, or an artificial intelligence (AI) chip). For example, the at least one processor 210 may include a display processing unit (DPU) (or display control circuitry) for the display 120. For example, the at least one processor 210 may include a memory controller (or memory control circuitry) for the memory 220 (e.g., a volatile memory) and/or a storage controller (or storage control circuitry) for the memory 220 (e.g., a non-volatile memory). For example, the at least one processor 210 may include a sensor interface (or a sensor hub) (or sensor control circuitry) for the sensor 230 and/or the acceleration sensor 240.

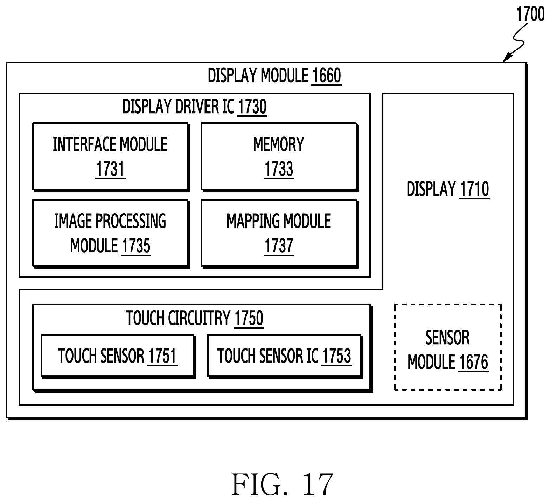

The display 120 may include at least a portion of a display module 1660 of FIGS. 16 and 17 or may correspond to at least a portion of the display module 1660 of FIGS. 16 and 17. The display 120 may be used to display a screen (e.g., visual information, visual data, and/or an image). For example, the display 120 may be used to display the screen obtained (or generated) (or rendered) by the at least one processor 210. For example, the display 120 may be used to display the screen provided from the at least one processor 210.

Although not illustrated in FIG. 2, the display 120 may include display driver circuitry (e.g., a display driver IC (DDI) 1730 of FIG. 17) and a display panel (e.g., a display 1710 of FIG. 17). For example, the display driver circuitry may be used to display the screen on the display panel. As a non-limiting example, the display driver circuitry may include memory (e.g., a graphic random access memory (GRAM)) configured to store information on at least a portion of the screen. As a non-limiting example, the display driver circuitry may not include the memory. As a non-limiting example, the display driver circuitry may be configured to operate for a command mode of mobile industry processor interface (MIPI) display serial interface (DSI), a video mode of the MIPI DSI, and/or a video hybrid mode of the MIPI DSI. As a non-limiting example, the display driver circuitry may be configured to execute at least a portion of operations exemplified in descriptions of FIGS. 4 to 15 below. For example, at least a portion of operations of the at least one processor 210 exemplified in the descriptions of FIGS. 4 to 10 may be replaced with at least one operation of the display driver circuitry. For example, the display driver circuitry may adjust, set, or provide a color temperature of a screen displayed on the display panel, based on control data (e.g., a control command) from the at least one processor 210.

The memory 220 may include one or more storage mediums (or one or more storage devices). For example, the memory 220 may include a memory assembly including one or more storage mediums. For example, the one or more storage mediums may include a permanent memory (e.g., a non-volatile memory 1634 of FIG. 16) such as a hard drive, a flash memory, or a read-only memory (ROM), a semi-permanent memory (e.g., a volatile memory 1632 of FIG. 16) such as a random access memory (RAM), any other suitable type of storage (or a storage assembly), or any combination thereof. The memory 220 may include a cache memory, which is one or more different types of memory used to temporarily store data for a function (or a feature) of the electronic device 100. As a non-limiting example, the cache memory may be included in the processor 210. The memory 220 may be fixedly embedded in the electronic device 100, or may be incorporated onto one or more suitable types of components (e.g., a subscriber identity module (SIM) card and/or a secure digital (SD) card) that may be repeatedly inserted into the electronic device 100 and removed from the electronic device 100.

For example, the memory 1620 may store one or more software applications such as an operating system (or system) software application, a firmware software application, a driver software application, a plugin (e.g., add-in, add-on, and/or applet) software application, and/or any other suitable software applications. For example, the one or more software applications may include instructions executable by the processor 210. For example, the memory 220 may store instructions callable by an application programming interface (API). For example, the memory 220 may store instructions in a library.

The memory 220 may include at least a portion of memory 1630 of FIG. 16 or may correspond to at least a portion of the memory 1630 of FIG. 16. The memory 220 may be configured to store instructions for causing the electronic device 100 to execute at least a portion of operations exemplified in descriptions of FIGS. 4 to 15 below. The instructions may be executable by the at least one processor 210.

The sensor 230 may be configured to obtain data on a state of ambient light of an environment around the electronic device 100. For example, the sensor 230 may be configured to obtain data indicating a color temperature of the environment. For example, the sensor 230 may be configured to obtain data on illuminance of the environment.

For example, the sensor 230 may include one or more sensors. As a non-limiting example, the sensor 230 may include an illuminance sensor. As a non-limiting example, the sensor 230 may include one or more cameras. As a non-limiting example, the sensor 230 may include a sensor dedicated for measuring a color temperature of an environment around the electronic device 100. For example, the sensor 230 may include at least a portion of a sensor module 1676 of FIG. 16 or may correspond to at least a portion of the sensor module 1676 of FIG. 16.

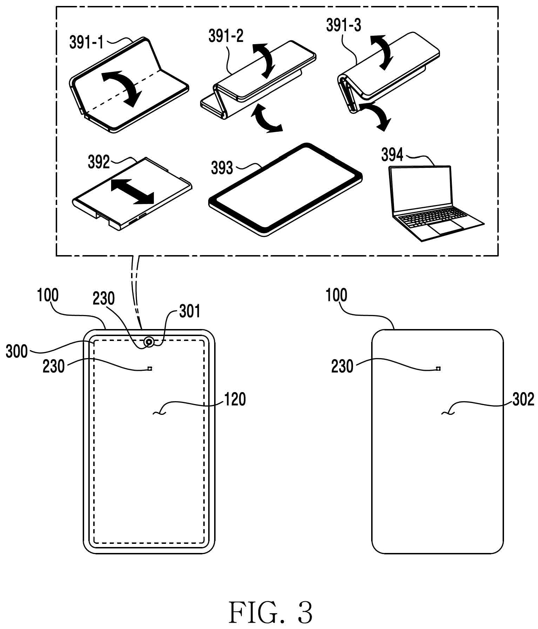

The sensor 230 may be included (or disposed) in various positions within the electronic device 100. For example, an arrangement of the sensor 230 is exemplified in the description of FIG. 3.

FIG. 3 illustrates an exemplary electronic device including a sensor and a display.

Referring to FIG. 3, the electronic device 100 may include a display 120 having an active area including pixels available for displaying a screen. For example, at least a portion 300 of the active area may be visible from a front side of the electronic device 100.

For example, the sensor 230 may be located, disposed, or arranged under the at least a portion 300 of the active area. For example, the sensor 230 under the at least a portion 300 of the active area may be configured to obtain data (or sensing data) on a state of light of the environment based on light from outside.

As a non-limiting example, the display 120 may include a non-active area 301 visible from the front side of the electronic device 100. For example, the non-active area 301 may include pixels in which emitting light is deactivated. As a non-limiting example, the sensor 230 may be aligned with the non-active area 301. As a non-limiting example, the sensor 230 may be located under an opening (not illustrated in FIG. 3) located in the non-active area 301.

For example, the sensor 230 under the at least a portion 300 of the active area and the sensor 230 aligned with the non-active area 301 may face a first direction toward which the display 120 faces.

For example, the sensor 230 may be visible from a rear side 302 of the electronic device 100. For example, the sensor 230 visible from the rear side 302 may face a second direction opposite to the first direction.

The arrangement of the sensor 230 exemplified in FIG. 3 may be applied to not only a bar-type smartphone (e.g., the electronic device 100 of FIG. 3) but also another type of mobile device. For example, the another type of the mobile device may include a foldable-type device (e.g., a foldable smartphone 391-1, a multi-foldable smartphone 391-2, or a multi-foldable smartphone 391-3), a slidable (or rollable) type device 392, a tablet 393, and/or a laptop computer 394.

Referring again to FIG. 2, the acceleration sensor 240 may be used to recognize a moving speed of the electronic device 100. For example, the acceleration sensor 240 may be configured to obtain data on an acceleration of the electronic device 100 in an x-axis direction, an acceleration of the electronic device 100 in a y-axis direction, and an acceleration of the electronic device 100 in a z-axis direction.

The sensor 230 and the sensor 240 may include at least a portion of the sensor module 1676 of FIG. 16 or may correspond to at least a portion of the sensor module 1676 of FIG. 16.

The communication circuitry 250 may be used to support communication between the electronic device 100 and an external electronic device. For example, the communication circuitry 250 may be configured to transmit, from the electronic device 100 to the external electronic device, a signal, information, and/or data. For example, the communication circuitry 250 may be configured to receive a signal, information, and/or data from the external electronic device. For example, the communication circuitry 250 may be configured to support one or more communication techniques. For example, the one or more communication techniques supported by the communication circuitry 250 may include a cellular communication technique, a wireless fidelity (Wi-Fi) communication technique, a Bluetooth communication technique, a Bluetooth low energy (BLE) communication technique, and/or an ultra-wideband (UWB) communication technique.

For example, the electronic device 100 may execute various operations related to a color temperature of a screen, by using the components exemplified in the description of FIG. 2.

For example, the electronic device 100 may change a color temperature of a screen by comparing color temperatures respectively determined according to different functions. This operation is exemplified in the description of FIG. 4.

FIG. 4 is a flowchart illustrating an exemplary method executed in an electronic device for determining a color temperature of a screen by comparing a color temperature determined according to a first function with a color temperature determined according to a second function.

Referring to FIG. 4, in operation 401, the at least one processor 210 may display, on the display 120, a screen having a first color temperature. As a non-limiting example, the first color temperature may be determined according to at least a portion of operations exemplified in the description of operations 402 to 405.

In operation 402, the at least one processor 210 may determine a second color temperature to be changed from the first color temperature. For example, the at least one processor 210 may obtain, from the sensor 230, data indicating a color temperature of an environment around the electronic device 100. For example, the sensor 230 may include an illuminance sensor disposed under the active area 300 of the display 120 used for displaying the screen. For example, the sensor 230 may include a camera facing a direction (e.g., the first direction) of the active area 300 of the display 120. For example, the sensor 230 may include a sensor dedicated for measuring a color temperature of an environment around the electronic device 100. However, the present disclosure is not limited thereto.

For example, the at least one processor 210 may determine the second color temperature to be changed from the first color temperature, according to the data. For example, the operation 402 may be executed according to a first function, activated in the electronic device 100, for adaptively changing a color temperature of the screen, according to a change in the color temperature of the environment.

In operation 403, the at least one processor 210 may determine, identify, check, or monitor whether the second color temperature is higher than a third color temperature. For example, the at least one processor 210 may determine whether the second color temperature is higher than the third color temperature by comparing the second color temperature with the third color temperature.

For example, the third color temperature may be determined using a usage time of day (or cumulative usage time of day) (or total usage time of day) of the electronic device 100. For example, the third color temperature may be determined to be a lower value as the usage time of day increases. For example, since sensitivity of a user's eyes to light decreases over time, the third color temperature may be determined to be a lower value as the usage time of day increases. For example, the third color temperature when the usage time of day is 2 hours may be higher than the third color temperature when the usage time of day is 3 hours.

As a non-limiting example, a rate at which the third color temperature decreases may be changed according to the usage time of day. For example, a rate at which the third color temperature decreases when the usage time of day is 2 hours may be lower than a rate at which the third color temperature decreases when the usage time of day is 3 hours. For example, the rate at which the third color temperature decreases may increase according to an increase in the usage time of day.

As a non-limiting example, the at least one processor 210 may determine the third color temperature using the usage time of day measured (consecutively) from a time of day (e.g., 6 PM) set according to a second function for eye comfort. For example, the second function may be a function provided to reduce fatigue of the user's eyes. For example, the second function may be a function of reducing fatigue of the user's eyes by reducing an intensity of blue light emitted from the display 120 for displaying the screen. For example, the second function may be used to improve a sleeping quality of the user. As a non-limiting example, the time of day may be earlier than a reference time (e.g., 6 hours) from a bedtime (e.g., midnight) of the user of the electronic device 100, which is determined using one or more software applications for user health stored in the memory 220. For example, when the user continuously uses the electronic device 100 from 6 PM to 9 PM, which is the time of day, the at least one processor 210 may recognize, determine, identify, check, or obtain a usage time of day (or cumulative usage time of day) (or total usage time of day) as 3 hours.

As a non-limiting example, the reference time may vary according to the usage time of day. For example, the reference time may be determined as 2 hours when the usage time of day is 2 hours, and the reference time may be determined as 3 hours when the usage time of day is 3 hours.

As a non-limiting example, the operation 403 may be executed on a condition that both the first function and the second function are activated in the electronic device 100. For example, in a case that the first function among the first function and the second function is activated in the electronic device 100, the operation 403 may not be executed in the electronic device 100. For another example, in a case that the second function among the first function and the second function is activated in the electronic device 100, the operation 403 may not be executed in the electronic device 100.

For example, the at least one processor 210 may execute the operation 404 based on the second color temperature higher than the third color temperature, and may execute the operation 405 based on the second color temperature lower than the third color temperature.

In the operation 404, the at least one processor 210 may change a color temperature of the screen from the first color temperature to the third color temperature, on a condition that the second color temperature is higher than the third color temperature. For example, when the second color temperature is higher than the third color temperature, the electronic device 100 may enhance a sleeping quality of a user, by determining the color temperature of the screen, independently of an increase in a color temperature of the environment within a time interval from the time of day (e.g., 6 PM) to the bedtime (e.g., midnight). For example, in a case that both the first function and the second function are activated and the second color temperature is higher than the third color temperature, a color temperature of the screen when the usage time of day is 3 hours and the color temperature of the environment is A may be substantially the same as a color temperature of the screen when the usage time of day is 3 hours and the color temperature of the environment is B different from A.

In the operation 405, the at least one processor 210 may change the color temperature of the screen from the first color temperature to the second color temperature, on a condition that the second color temperature is lower than the third color temperature. For example, in a case that both the first function and the second function are activated and the second color temperature is lower than the third color temperature, a color temperature of the screen when the usage time of day is 3 hours and the color temperature of the environment is C may be higher than a color temperature of the screen when the usage time of day is 3 hours and the color temperature of the environment is D lower than C.

As described above, the electronic device 100 may reduce fatigue of the user's eyes by comparing the second color temperature with the third color temperature, within a specific time interval in a day.

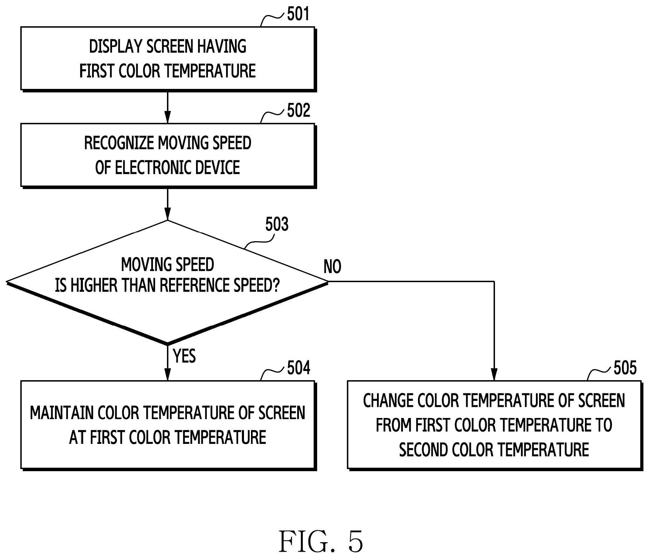

For example, the electronic device 100 may adaptively execute control of a color temperature of a screen displayed on the display 120 according to a moving speed of the electronic device 100. This operation is exemplified in the description of FIG. 5.

FIG. 5 is a flowchart illustrating an exemplary method executed in an electronic device for determining a color temperature of a screen by comparing a moving speed of the electronic device with a reference speed.

Referring to FIG. 5, in operation 501, the at least one processor 210 may display, on the display 120, a screen having a first color temperature. As a non-limiting example, the screen may be a screen obtained from a software application for a navigation service stored in the memory 220.

In operation 502, the at least one processor 210 may recognize a moving speed of the electronic device 100 using the acceleration sensor 240. For example, the at least one processor 210 may recognize the moving speed using data obtained from the acceleration sensor 240. For example, the data may indicate acceleration of the electronic device 100. As a non-limiting example, the communication circuitry 250 of the electronic device 100 may include global navigation satellite system (GNSS) reception circuitry. For example, the at least one processor 210 may recognize the moving speed, by further using a signal received through the GNSS reception circuitry. As a non-limiting example, the at least one processor 210 may receive, from an external electronic device worn by a user of the electronic device 100 through the communication circuitry 250, step information of the user, and may recognize the moving speed by further using the step information.

In operation 503, the at least one processor 210 may determine, identify, check, or monitor whether the moving speed is higher than a reference speed. For example, the at least one processor 210 may determine whether the moving speed is higher than the reference speed by comparing the moving speed with the reference speed. As a non-limiting example, the reference speed may be defined to recognize whether the user of the electronic device 100 is in a vehicle.

For example, the at least one processor 210 may execute operation 504 based on the moving speed being higher than the reference speed, and may execute operation 505 based on the moving speed being lower than the reference speed.

In operation 504, the at least one processor 210 may maintain a color temperature of the screen displayed on the display 120 at the first color temperature on a condition that the moving speed is higher than the reference speed. For example, since the moving speed being higher than the reference speed indicates that the electronic device 100 is located in a moving vehicle, the at least one processor 210 may maintain the color temperature of the screen at the first color temperature based on identifying the moving speed higher than the reference speed. For example, based on the moving speed higher than the reference speed, the at least one processor 210 may deactivate a function of changing the color temperature of the screen according to a change in a color temperature of an environment around the electronic device 100 or may refrain from applying the change in the color temperature of the environment recognized through the sensor 230 for changing the color temperature of the screen. For example, the at least one processor 210 may refrain from determining a color temperature (e.g., the second color temperature in operation 505) of the screen to be changed from the first color temperature, in accordance with data obtained from the sensor 230 and indicating the color temperature of the environment, based on the moving speed higher than the reference speed. For example, the at least one processor 210 may maintain the color temperature of the screen at the first color temperature, independently of the change in the color temperature of the environment, based on the moving speed higher than the reference speed.

For example, in a case that the screen is a screen from a software application for a navigation service, changing the color temperature of the screen may reduce visibility of an electronic map (e.g., an electronic map for the navigation service) in the screen, and thus the at least one processor 210 may maintain the color temperature of the screen at the first color temperature, based on the moving speed higher than the reference speed.

In operation 505, the at least one processor 210 may change the color temperature of the screen displayed on the display 120 from the first color temperature to the second color temperature determined according to the data (e.g., the data obtained from the sensor 230), on a condition that the moving speed is lower than the reference speed. For example, since the moving speed being lower than the reference speed indicates that the electronic device 100 is not located in a moving vehicle, the at least one processor 210 may change the color temperature of the screen from the first speed to the second color temperature corresponding to the color temperature of the environment, based on identifying the moving speed lower than the reference speed.

FIG. 5 illustrates an example of comparing a reference speed with a moving speed to control the color temperature of the screen, but this is merely exemplary. The at least one processor 210 may control the color temperature of the screen based on step information of a user. For example, the at least one processor 210 may maintain the color temperature of the screen, based on recognizing that a location of the electronic device 100 is maintained from the step information. As a non-limiting example, the at least one processor 210 may refrain from using the data from the sensor 230 to change or control the color temperature of the screen, on a condition that the location of the electronic device 100 is maintained. For example, the at least one processor 210 may activate or deactivate the sensor 230 with respect to control of the color temperature of the screen, according to the step information. As a non-limiting example, the step information may be recognized using the acceleration sensor 240 or may be received from an external electronic device (e.g., a wearable device (e.g., a smartwatch or earbuds)) in conjunction with the electronic device 100 through the communication circuitry 250.

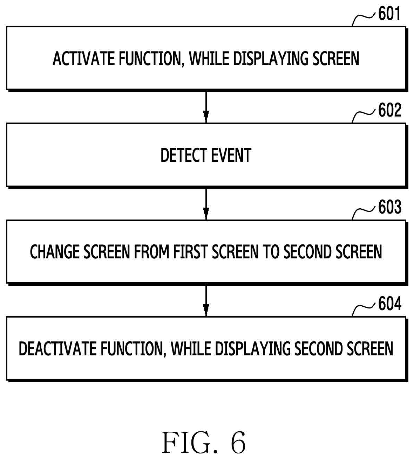

For example, the electronic device 100 may adaptively execute control of a color temperature of a screen displayed on the display 120, based on a type of a software application installed in the electronic device 100. This operation is exemplified in the description of FIG. 6.

FIG. 6 is a flowchart illustrating an exemplary method executed in an electronic device for activating or deactivating a function related to a color temperature according to a type of a software application.

Referring to FIG. 6, in operation 601, the at least one processor 210 may activate a function of (adaptively) changing a color temperature of a screen displayed on the display 120 in accordance with data obtained from the sensor 230 and indicating a color temperature of an environment around the electronic device 100, while displaying a first screen from a first software application stored in the memory 220. For example, the first software application may be a software application generating one or more contents for which color accuracy is relatively less required. For example, the first screen may include one or more contents for which a visual quality of a service provided through the first software application is maintained even when the first screen is not displayed in colors intended by the first software application according to the function. For example, a color temperature of the first screen may be changed according to a change in the color temperature of the environment around the electronic device 100 according to activating the function.

In operation 602, the at least one processor 210 may detect an event for displaying, on the display 120, a second screen from a second software application stored in the memory 220. As a non-limiting example, the event may indicate an event causing the electronic device 100 (or the display 120) to display the second screen. As a non-limiting example, the event may include a touch input received through the display 120, a voice input received through a microphone of the electronic device 100, and/or a signal received from an external electronic device through the communication circuitry 250.

In operation 603, the at least one processor 210 may change a screen displayed on the display 120 from the first screen to the second screen, based on the event (or in response to the event). As a non-limiting example, the at least one processor 210 may cease displaying the first screen and start displaying the second screen based on the event.

In operation 604, the at least one processor 210 may deactivate the function while displaying the second screen on the display 120. For example, the second software application may be a software application generating one or more contents for which color accuracy is relatively more required compared to the first software application. For example, the second screen may include one or more contents for which a visual quality of a service provided through the second software application is reduced when the second screen is not displayed in colors intended by the second software application according to the function. As a non-limiting example, the second software application may include a software application for a navigation service and/or a software application for image editing. As a non-limiting example, the second software application may be one of one or more software applications included in a list (e.g., stored in the memory 220) used to deactivate the function. As a non-limiting example, the at least one processor 210 may update the list, based on a type, a name, metadata, or a combination thereof of a software application installed in the electronic device 100.

For example, the color temperature of the second screen may be maintained independently of a change in the color temperature of the environment, according to executing the operation 604. For example, the color temperature of the second screen may be maintained at a color temperature set (or designated) for the second software application. As a non-limiting example, the at least one processor 210 may deactivate the function while displaying the second screen even when the function is activated according to a user setting.

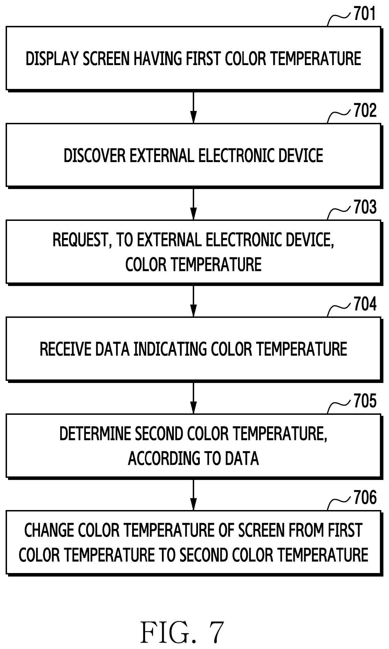

For example, the electronic device 100 may control a color temperature of a screen displayed on the display 120 according to a color temperature measured by an external electronic device. This operation is exemplified in the description of FIG. 7.

FIG. 7 is a flowchart illustrating an exemplary method executed in an electronic device for determining a color temperature of a screen using communication with an external electronic device.

Referring to FIG. 7, in operation 701, the at least one processor 210 may display, on the display 120, a screen having a first color temperature.

In operation 702, the at least one processor 210 may discover, through the communication circuitry 250, an external electronic device in conjunction with the electronic device 100 based on a user account of the electronic device 100, while displaying the screen having the first color temperature. As a non-limiting example, the external electronic device may be an electronic device located in a space (e.g., a home or a company) for a user of the electronic device 100. As a non-limiting example, the external electronic device may be a wearable device worn by the user.

As a non-limiting example, the at least one processor 210 may broadcast a first signal (e.g., an advertising signal) including information on the user account through the communication circuitry 250. For example, the at least one processor 210 may discover the external electronic device by receiving, through the communication circuitry 250, a second signal (e.g., including information on the user account) broadcasted from the external electronic device, in response to the first signal.

As a non-limiting example, the at least one processor 210 may discover the external electronic device by receiving, through the communication circuitry 250, a signal including information on the user account and broadcasted from the external electronic device independently of whether the first signal is received.

In operation 703, the at least one processor 210 may request, to the external electronic device through the communication circuitry 250, a color temperature of an environment around the external electronic device, based on operation 702. For example, the at least one processor 210 may transmit a signal indicating the request (or a signal for the request) to the external electronic device through the communication circuitry 250.

As a non-limiting example, the request may be unicasted to the external electronic device through a connection between the electronic device 100 and the external electronic device. As a non-limiting example, the request may be broadcasted from the electronic device 100 together with the user account, before the connection between the electronic device 100 and the external electronic device is established. For example, the request may be broadcasted based on receiving, by the electronic device 100 located within a reference distance (e.g., corresponding to a coverage of a communication technique (e.g., wireless fidelity (Wi-Fi) or Bluetooth) available in both the electronic device 100 and the external electronic device) from the external electronic device, information (e.g., the user account or device information (or capability information) of the external electronic device) broadcasted from the external electronic device.

In operation 704, the at least one processor 210 may receive, through the communication circuitry 250, data transmitted (or broadcasted) (or unicasted) from the external electronic device in response to the request and indicating the color temperature of the environment around the external electronic device.

In operation 705, the at least one processor 210 may determine a second color temperature to be changed from the first color temperature, according to the data. As a non-limiting example, the at least one processor 210 may determine the second color temperature corresponding to the color temperature of the environment around the electronic device 100 even when the electronic device 100 does not include the sensor 230, through operation 705. As a non-limiting example, the at least one processor 210 may use data from a sensor of the external electronic device having a higher resolution than data from the sensor 230 to determine the second color temperature, through operation 705.

In operation 706, the at least one processor 210 may change the color temperature of the screen from the first color temperature to the second color temperature determined according to operation 705. For example, the electronic device 100 may execute a function of changing a color temperature of a screen displayed on the display 120, according to a change in a color temperature of an environment around the electronic device 100 through assistance of the external electronic device, through operations 701 to 706.

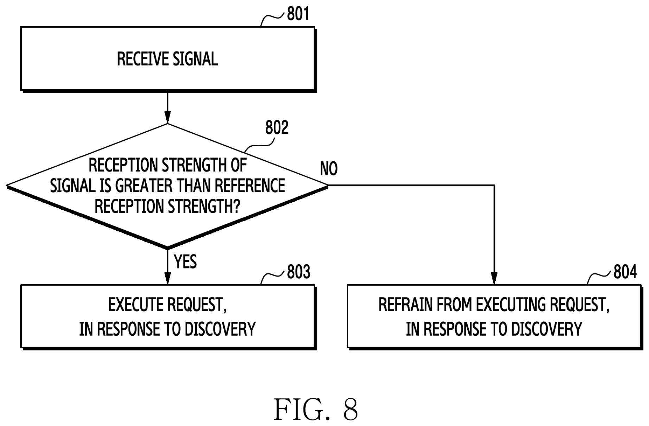

For example, the operations of FIG. 7 may be executed on a condition that the external electronic device is adjacent to the electronic device 100. For example, the at least one processor 210 may execute an operation of determining whether the external electronic device is adjacent to the electronic device 100 for the operations of FIG. 7. This operation is exemplified in the description of FIG. 8.

FIG. 8 is a flowchart illustrating an exemplary method executed in an electronic device for adaptively executing a request related to determining a color temperature according to a reception strength of a signal.

Referring to FIG. 8, in operation 801, the at least one processor 210 may receive, through the communication circuitry 250, a signal transmitted (or broadcasted) (or unicasted) from the external electronic device. For example, the signal may include information on the user account. As a non-limiting example, the signal may be broadcasted from the external electronic device before the external electronic device is discovered by the electronic device 100 (e.g., before operation 702). As a non-limiting example, the signal may be broadcasted from the external electronic device after the external electronic device is discovered by the electronic device 100 (e.g., after operation 702). As a non-limiting example, the signal may be unicasted from the external electronic device through the connection after the external electronic device is discovered by the electronic device 100 (e.g., after operation 702).

In operation 802, the at least one processor 210 may determine, check, measure, monitor, identify, or recognize whether a reception strength of the signal is greater than a reference reception strength, based on operation 801. For example, the reference reception strength may be defined to estimate a distance between the electronic device 100 and the external electronic device.

For example, the at least one processor 210 may execute operation 803 based on the reception strength being greater than the reference reception strength, and may execute operation 804 based on the reception strength being smaller than the reference reception strength.

In operation 803, the at least one processor 210 may execute the request exemplified in the description of operation 703, on a condition that the reception strength is greater than the reference reception strength. For example, since the reception strength being greater than the reference reception strength indicates the external electronic device adjacent to the electronic device 100, the at least one processor 210 may execute the request to execute operations 704 to 706. As a non-limiting example, the request may be executed in response to the discovery executed in operation 702.

In operation 804, the at least one processor 210 may refrain from executing the request exemplified in the description of operation 703, on a condition that the reception strength is smaller than the reference reception strength. For example, since the reception strength being smaller than the reference reception strength indicates the external electronic device spaced apart from the electronic device 100, the at least one processor 210 may refrain from executing the request to block execution of operations 704 to 706. As a non-limiting example, executing the request in response to the discovery executed in operation 702 may be skipped, omitted, or bypassed.

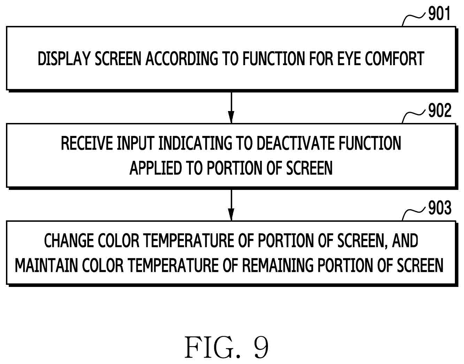

For example, contents in a screen displayed on the display 120 may include one or more first contents requiring color accuracy relatively and one or more second contents not requiring color accuracy relatively. For example, a function for eye comfort and/or a function of changing a color temperature of the screen according to a change in a color temperature of an environment around the electronic device 100 may reduce a quality of a service provided through the one or more first contents. For example, the at least one processor 210 may execute an operation of deactivating (or releasing) the function for eye comfort (or the function of changing the color temperature of the screen according to the change in the color temperature of the environment) for the one or more first contents, from among the one or more first contents and the one or more second contents, for the quality of the service provided through the one or more first contents. This operation is exemplified in the description of FIG. 9.

FIG. 9 is a flowchart illustrating an exemplary method executed in an electronic device for changing a color temperature of a portion of a screen and maintaining a color temperature of another portion of the screen.

Referring to FIG. 9, in operation 901, the at least one processor 210 may display, on the display 120, a screen according to the function for eye comfort (and/or the function of changing a color temperature of a screen according to a change in a color temperature of an environment around the electronic device 100).

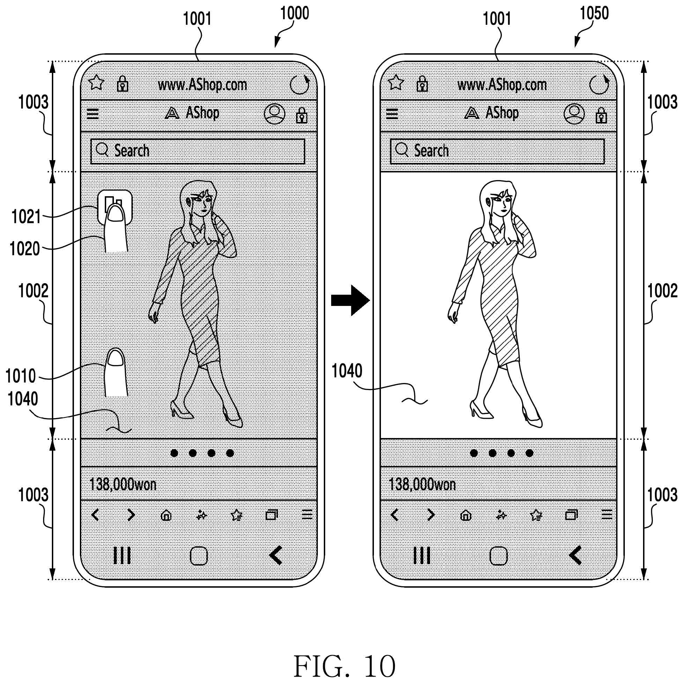

In operation 902, the at least one processor 210 may receive an input indicating to deactivate the function applied to a portion of the screen displayed on the display 120. The input may be defined in various ways. An example of the input is exemplified in the description of FIG. 10.

FIG. 10 illustrates an example of a screen for changing a color temperature of a portion and maintaining a color temperature of another portion.

Referring to FIG. 10, the at least one processor 210 may display, on the display 120, a screen 1001 according to operation 901, as in a state 1000. For example, the at least one processor 210 may receive the input exemplified in the description of operation 902 while the screen 1001 is displayed.

As a non-limiting example, the at least one processor 210 may receive a touch input 1010 on a portion 1002 of the screen 1001 in the state 1000. For example, the at least one processor 210 may receive the touch input 1010 as the input exemplified in the description of operation 902. For example, the touch input 1010 may cause a change from the state 1000 to a state 1050.

For example, the touch input 1010 may be a touch input indicating to select an image 1040 (e.g., the one or more first contents) located (or included) in the portion 1002 of the screen 1001. As a non-limiting example, the touch input 1010 may be a touch input maintained on the image 1040 for a reference time.

As a non-limiting example, in the state 1000, the at least one processor 210 may display an executable object 1021 floated (or overlapped) on the screen 1001 according to the function, while displaying the screen 1001. For example, the executable object 1021 may be floated on the screen 1001 in response to displaying the screen 1001 on the display 120 according to the function, based on checking (or recognizing) an image 1040 (e.g., the one or more first contents) included in the screen 1001. For example, the at least one processor 210 may receive a touch input 1020 on the executable object 1021 in the state 1000. For example, the touch input 1020 may be received as the input exemplified in the description of operation 902. For example, the touch input 1020 may cause a change from the state 1000 to the state 1050.

As a non-limiting example, a function for a timeout of the executable object 1021 may be used in the electronic device 100. For example, the at least one processor 210 may maintain displaying the executable object 1021 floated on the screen 1001 before the timeout of the executable object 1021, and may cease displaying the executable object 1021 floated on the screen 1001 in response to the timeout of the executable object 1021.

Referring again to FIG. 9, in operation 903, the at least one processor 210 may change a color temperature of the portion of the screen (e.g., a portion of the screen indicated by the input received in operation 902) and maintain a color temperature of a remaining portion of the screen, based on the input received in operation 902. For example, the at least one processor 210 may change the color temperature of the portion of the screen, by deactivating applying the function to the portion of the screen. For example, the at least one processor 210 may change the color temperature of the portion of the screen, by maintaining applying the function to the remaining portion of the screen.

For example, the at least one processor 210 may change the color temperature of the portion of the screen and maintain the color temperature of the remaining portion of the screen, by applying, to the portion of the screen based on the input in operation 902, an inverse function of a function used to determine the color temperature of the portion of the screen before the input in operation 902 is received. For example, applying the inverse function may be executed by the at least one processor 210. For example, applying the inverse function may also be executed by the display driver circuitry in the display 120. For example, when applying the inverse function is executed by the display driver circuitry, the at least one processor 210 may transmit, to the display driver circuitry, a command (or a signal) indicating to apply the inverse function (e.g., a command (or a signal) indicating the input received in operation 902).

As a non-limiting example, the change of the color temperature of the portion of the screen may be executed using Equation 1 below. $image = {image}_{CCT} \times {\left[\begin{matrix}a & b & c \\ d & e & f \\ g & h & i\end{matrix}\right]}^{- 1}$

In Equation 1, 'image' represents the portion of the screen after releasing applying the function, and 'image_{CCT}' represents the portion of the screen while applying the function, and $\left[\begin{matrix}a & b & c \\ d & e & f \\ g & h & i\end{matrix}\right]$ represents the function, and ${\left[\begin{matrix}a & b & c \\ d & e & f \\ g & h & i\end{matrix}\right]}^{- 1}$ represents an inverse function of the function. 'a', 'b', 'c', 'd', 'e', 'f', 'g', 'h', and 'i' of Equation 1 are arbitrary real numbers for the function.

A state of the screen according to operation 903 is exemplified in the description of FIG. 10. Referring again to FIG. 10, the at least one processor 210 may change the state 1000 to the state 1050, based on the input (e.g., the touch input 1010 or the touch input 1020) received according to operation 902. For example, in the state 1050, the at least one processor 210 may change the color temperature of the portion 1002 (e.g., including the image 1040) of the screen 1001, by releasing the function applied to the portion 1002 of the screen 1001 in the state 1000. For example, a color temperature of a remaining portion 1003 of the screen 1001 in the state 1050 may be substantially the same as the color temperature of the remaining portion 1003 of the screen 1001 in the state 1000. For example, in a case that the color temperature of the environment around the electronic device 100 is maintained, the color temperature of the remaining portion 1003 of the screen 1001 in the state 1050 may be maintained at the color temperature of the remaining portion 1003 of the screen 1001 in the state 1000.

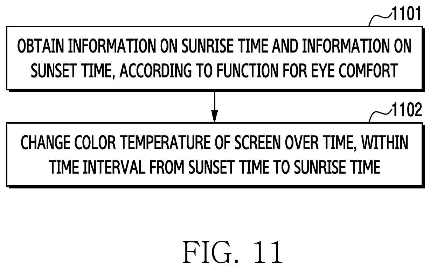

For example, a function of the electronic device 100 for eye comfort may be applied during a time interval from a sunset time to a sunrise time. For example, the at least one processor 210 may execute an operation for the function applied within the time interval. This operation is exemplified in the description of FIG. 11.

FIG. 11 is a flowchart illustrating an exemplary method executed in an electronic device for changing a color temperature within a time interval from a sunset time to a sunrise time.

Referring to FIG. 11, in operation 1101, the at least one processor 210 may obtain information on the sunrise time and information on the sunset time, by using a location of the electronic device 100 determined through the communication circuitry 250, according to the function for eye comfort. For example, the at least one processor 210 may obtain the information on the sunrise time and the information on the sunset time, by using location information of the electronic device 100 recognized using GNSS reception circuitry in the communication circuitry 250 (e.g., location information obtained using GNSS satellites), location information of the electronic device 100 recognized using cellular communication circuitry in the communication circuitry 250 (e.g., location information obtained using cellular communication network information), location information of the electronic device 100 recognized using Wi-Fi communication circuitry in the communication circuitry 250 (e.g., location information obtained using an access point (AP)), and/or most recent location information of the electronic device 100 used by a software application stored in the memory 220. For example, the at least one processor 210 may obtain the information on the sunrise time and the information on the sunset time by using "LocationManager" stored in the memory 220.

In operation 1102, the at least one processor 210 may change a color temperature of a screen displayed on the display 120 over time, within a time interval from the sunset time to the sunrise time. For example, the at least one processor 210 may change the color temperature of the screen such that the color temperature of the screen gradually decreases over time within the time interval. For example, when the sunset time is 6 PM, the sunrise time is 6 AM, and the color temperature of the screen at 8 PM is A, the color temperature of the screen at 9 PM may be B lower than A, according to operation 1102.

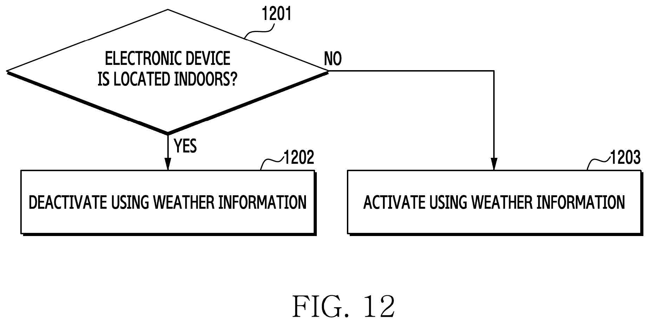

For example, weather information may be further used to change the color temperature of the screen. For example, the at least one processor 210 may change the color temperature of the screen, by further using the weather information received through the communication circuitry 250. For example, the at least one processor 210 may activate or deactivate using the weather information to change the color temperature of the screen according to a location of the electronic device 100. This operation is exemplified in the description of FIG. 12.

FIG. 12 is a flowchart illustrating an exemplary method executed in an electronic device for activating or deactivating using weather information for determining a color temperature according to a location of the electronic device.

Referring to FIG. 12, in operation 1201, the at least one processor 210 may determine, check, monitor, identify, or recognize whether the electronic device 100 is located indoors, by using the communication circuitry 250. As a non-limiting example, the at least one processor 210 may determine whether the electronic device 100 is located indoors, by using a signal received from an external electronic device through the communication circuitry 250. For example, the at least one processor 210 may determine that the electronic device 100 is located indoors, based on receiving a signal from an external electronic device located indoors, which is registered in the electronic device 100, through the communication circuitry 250. For example, the at least one processor 210 may determine that the electronic device 100 is located outdoor (or is not located indoors), in accordance with receiving a signal from an external electronic device (e.g., a base station) located outdoor through the communication circuitry 250.

As a non-limiting example, the at least one processor 210 may determine whether the electronic device 100 is located indoors, by using the acceleration sensor 240. For example, the at least one processor 210 may determine that the electronic device 100 is located outdoor, based on checking that a moving speed of the electronic device 100 recognized through the acceleration sensor 240 is higher than a reference speed, and may determine that the electronic device 100 is located indoors, based on checking that the moving speed recognized through the acceleration sensor 240 is lower than the reference speed.

For example, the at least one processor 210 may execute operation 1202 based on the electronic device 100 being located indoors, and may execute operation 1203 based on the electronic device 100 being located outdoor.

In operation 1202, the at least one processor 210 may deactivate using the weather information to change a color temperature of a screen displayed on the display 120, on a condition that the electronic device 100 is located indoors. For example, since the electronic device 100 being located indoors may indicate that the color temperature of the environment around the electronic device 100 is independent of the weather information, the at least one processor 210 may deactivate using the weather information to change the color temperature of the screen.

In operation 1203, the at least one processor 210 may activate using the weather information to change the color temperature of the screen, on a condition that the electronic device 100 is located outdoor. For example, since the electronic device 100 being located outdoor may indicate that the color temperature of the environment is determined according to the weather information, the at least one processor 210 may activate using the weather information to change the color temperature of the screen.

For example, the sensor 230 of the electronic device 100 may be arranged in various positions in the electronic device 100. For example, the sensor 230 may include a first sensor and a second sensor. For example, the first sensor may face the first direction toward which the display 120 faces and may be visible from a front side of the electronic device 100. For example, the second sensor may face a second direction opposite to the first direction and may be visible from a rear side of the electronic device 100. For example, first data regarding ambient light around the electronic device 100 obtained using the first sensor may further indicate a state of light distributed in a first space between a user's eyes and the front side. For example, second data regarding ambient light around the electronic device 100 obtained using the second sensor may further indicate a state of light distributed in a second space from the rear side.

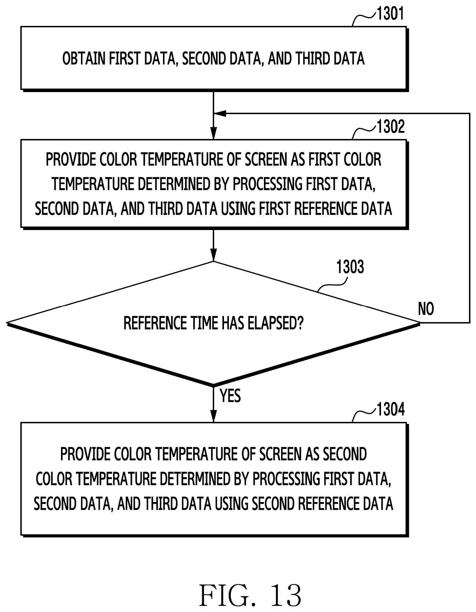

For example, since not only a state of ambient light around the electronic device 100 but also a state of light emitted from the display 120 may be applied to the first data obtained using the first sensor and the second data obtained using the second sensor, the at least one processor 210 may obtain third data (e.g., a brightness level of the display 120 and/or an average picture level (APL)) regarding the light emitted from the display 120 to determine a color temperature of an environment around the electronic device 100. For example, the at least one processor 210 may determine the color temperature of the environment, by using the first data, the second data, and the third data, and may determine a color temperature of a screen displayed on the display 120 according to the determined color temperature of the environment. This operation is exemplified in the description of FIG. 13.

FIG. 13 is a flowchart illustrating an exemplary method executed in an electronic device for providing a color temperature of a screen by changing reference data for processing first data, second data, and third data over time.

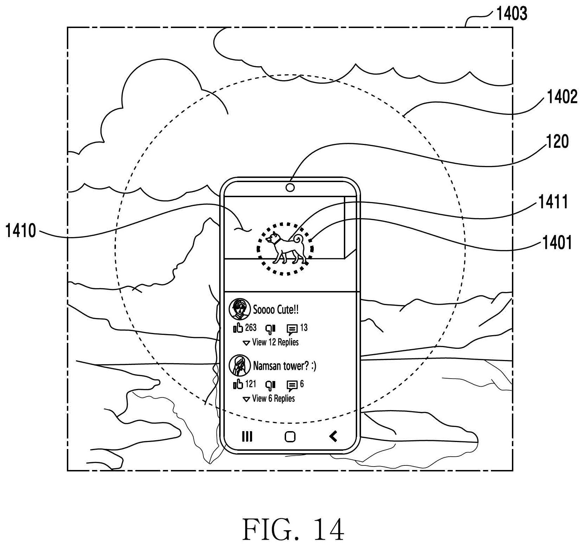

Referring to FIG. 13, in operation 1301, the at least one processor 210 may obtain the first data, the second data, and the third data exemplified in the above description. For example, the first data, the second data, and the third data may be obtained to determine a color temperature of an environment around the electronic device 100. For example, the first data, the second data, and the third data may indicate a state of light in a first field related to stimulation of a user's eyes, a second field related to a background field (or a first peripheral field) around the first field, and a third field related to a surround field (or a second peripheral field) around the second field. The first field, the second field, and the third field are exemplified in the description of FIG. 14.

FIG. 14 illustrates an example of an environment indicated by first data, second data, and third data.

Referring to FIG. 14, a first field 1401 may correspond to a viewing angle (e.g., about 2 degrees) of a user. For example, when a user looks at a visual object 1411 in a screen 1410 displayed on the display 120, the first field 1401 may be arranged with respect to the visual object 1411. For example, the first field 1401 may correspond to a fovea (or fovea centrails) of an eye looking at the visual object 1411. For example, a second field 1402 may be located around the first field 1401. For example, the second field 1402 may be a field viewed by the user's eyes but less focused than the first field 1401. For example, a third field 1403 may be located around the second field 1402. For example, since a state of light of the first field 1401, a state of light of the second field 1402, and a state of light of the third field 1403 are applied to a state of light of an environment around the electronic device 100, the at least one processor 210 may obtain the first data, the second data, and the third data. For example, the third data may reflect a state of light of the first field 1401 more than the first data and the second data, the first data may reflect a state of light of the second field 1402 more than the second data and the third data, and the second data may reflect a state of light of the third field 1403 more than the first data and the third data.

Referring again to FIG. 13, in operation 1302, the at least one processor 210 may provide a color temperature of the screen (e.g., the screen 14010) displayed on the display 120 as a first color temperature determined by processing the first data, the second data, and the third data using first reference data stored in the memory 220. For example, the first reference data may include information on weights applied to each of the first data, the second data, and the third data to determine the color temperature of the environment.

In operation 1303, the at least one processor 210 may check, determine, identify, or monitor whether a reference time has elapsed, based on providing the color temperature of the screen as the first color temperature using the first reference data. For example, sensitivity of a user's eyes may decrease as a state of light of the first field 1401 is maintained. For example, the at least one processor 210 may check whether the reference time has elapsed, to change the color temperature of the screen according to the decrease in the sensitivity. For example, the at least one processor 210 may further check whether the screen is maintained on the display 120, to change the color temperature of the screen.

For example, the at least one processor 210 may maintain processing the first data, the second data, and the third data using the first reference data to provide the color temperature of the screen, until the reference time elapses. For example, the at least one processor 210 may execute operation 1304, in response to (or based on) the elapse of the reference time.

In operation 1304, the at least one processor 210 may provide a color temperature of the screen (e.g., the screen 14010) displayed on the display 120 as a second color temperature determined by processing the first data, the second data, and the third data by using second reference data stored in the memory 220 and at least partially different from the first reference data. For example, the second reference data may include information on weights applied to each of the first data, the second data, and the third data to determine the color temperature of the environment. As a non-limiting example, a weight applied to the third data within the second reference data may be lower than a weight applied to the third data within the first reference data.

For example, the electronic device 100 may provide a color temperature of the screen suitable for a color temperature of an environment around the electronic device 100, based on the first reference data, the second reference data, the first data, the second data, and the third data.

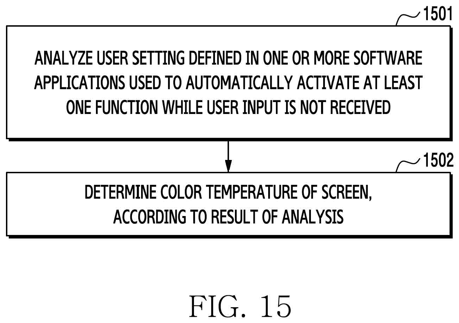

For example, the electronic device 100 may store, in the memory 220, one or more software applications used to automatically activate at least one function (or task) while a user input is not received. For example, the one or more software applications (e.g., a Bixby Routines software application or a shortcuts software application) may be used to define an input sequence corresponding to a user input, for executing at least one function (or task) of the electronic device 100, to be executed while the user input is not received, generate an output sequence corresponding to the input sequence (or an output sequence mapped to the input sequence), and activate the at least one function (or task) by executing the output sequence without the user input, accordin to checking, identifying, or recognizing the input sequence. For example, since a user setting defined (or registered) in the one or more software applications may include information on a color temperature of an environment around the electronic device 100, the at least one processor 210 may analyze the user setting and determine the color temperature of the screen displayed on the display 120 according to a result of the analysis. This operation is exemplified in the description of FIG. 15.

FIG. 15 illustrates an exemplary method executed in an electronic device for determining a color temperature of a screen according to a user setting defined in one or more software applications.

Referring to FIG. 15, in operation 1501, the at least one processor 210 may analyze a user setting (e.g., a routine or a shortcut) defined in the one or more software applications used to automatically activate (or execute) at least one function of the electronic device 100 while a user input is not received.

In operation 1502, the at least one processor 210 may determine a color temperature of a screen displayed on the display 120 according to a result of the analysis. For example, the at least one processor 210 may recognize that a bedtime of a user arrives after a reference time according to the result of the analysis, and may determine the color temperature of the screen as a color temperature lower than a reference color temperature according to the result of the recognition. As a non-limiting example, determining the color temperature of the screen as the color temperature lower than the reference color temperature may be executed according to a function for eye comfort.

The above-described operations may also be executed in an electronic device 1601 exemplified through the descriptions of FIGS. 16 and 17.

FIG. 16 is a block diagram illustrating an electronic device 1601 in a network environment 1600 according to various embodiments. Referring to FIG. 16, the electronic device 1601 in the network environment 1600 may communicate with an electronic device 1602 via a first network 1698 (e.g., a short-range wireless communication network), or at least one of an electronic device 1604 or a server 1608 via a second network 1699 (e.g., a long-range wireless communication network). According to an embodiment, the electronic device 1601 may communicate with the electronic device 1604 via the server 1608. According to an embodiment, the electronic device 1601 may include a processor 1620, memory 1630, an input module 1650, a sound output module 1655, a display module 1660, an audio module 1670, a sensor module 1676, an interface 1677, a connecting terminal 1678, a haptic module 1679, a camera module 1680, a power management module 1688, a battery 1689, a communication module 1690, a subscriber identification module (SIM) 1696, or an antenna module 1697. In some embodiments, at least one of the components (e.g., the connecting terminal 1678) may be omitted from the electronic device 1601, or one or more other components may be added in the electronic device 1601. In some embodiments, some of the components (e.g., the sensor module 1676, the camera module 1680, or the antenna module 1697) may be implemented as a single component (e.g., the display module 1660).

The processor 1620 may execute, for example, software (e.g., a program 1640) to control at least one other component (e.g., a hardware or software component) of the electronic device 1601 coupled with the processor 1620, and may perform various data processing or computation. According to an embodiment, as at least part of the data processing or computation, the processor 1620 may store a command or data received from another component (e.g., the sensor module 1676 or the communication module 1690) in volatile memory 1632, process the command or the data stored in the volatile memory 1632, and store resulting data in non-volatile memory 1634. According to an embodiment, the processor 1620 may include a main processor 1621 (e.g., a central processing unit (CPU) or an application processor (AP)), or an auxiliary processor 1623 (e.g., a graphics processing unit (GPU), a neural processing unit (NPU), an image signal processor (ISP), a sensor hub processor, or a communication processor (CP)) that is operable independently from, or in conjunction with, the main processor 1621. For example, when the electronic device 1601 includes the main processor 1621 and the auxiliary processor 1623, the auxiliary processor 1623 may be adapted to consume less power than the main processor 1621, or to be specific to a specified function. The auxiliary processor 1623 may be implemented as separate from, or as part of the main processor 1621.

The auxiliary processor 1623 may control at least some of functions or states related to at least one component (e.g., the display module 1660, the sensor module 1676, or the communication module 1690) among the components of the electronic device 1601, instead of the main processor 1621 while the main processor 1621 is in an inactive (e.g., sleep) state, or together with the main processor 1621 while the main processor 1621 is in an active state (e.g., executing an application). According to an embodiment, the auxiliary processor 1623 (e.g., an image signal processor or a communication processor) may be implemented as part of another component (e.g., the camera module 1680 or the communication module 1690) functionally related to the auxiliary processor 1623. According to an embodiment, the auxiliary processor 1623 (e.g., the neural processing unit) may include a hardware structure specified for artificial intelligence model processing. An artificial intelligence model may be generated by machine learning. Such learning may be performed, e.g., by the electronic device 1601 where the artificial intelligence is performed or via a separate server (e.g., the server 1608). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1630 may store various data used by at least one component (e.g., the processor 1620 or the sensor module 1676) of the electronic device 1601. The various data may include, for example, software (e.g., the program 1640) and input data or output data for a command related thereto. The memory 1630 may include the volatile memory 1632 or the non-volatile memory 1634.

The program 1640 may be stored in the memory 1630 as software, and may include, for example, an operating system (OS) 1642, middleware 1644, or an application 1646.

The input module 1650 may receive a command or data to be used by another component (e.g., the processor 1620) of the electronic device 1601, from the outside (e.g., a user) of the electronic device 1601. The input module 1650 may include, for example, a microphone, a mouse, a keyboard, a key (e.g., a button), or a digital pen (e.g., a stylus pen).

The sound output module 1655 may output sound signals to the outside of the electronic device 1601. The sound output module 1655 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1660 may visually provide information to the outside (e.g., a user) of the electronic device 1601. The display module 1660 may include, for example, a display, a hologram device, or a projector and control circuitry to control a corresponding one of the display, hologram device, and projector. According to an embodiment, the display module 1660 may include a touch sensor adapted to detect a touch, or a pressure sensor adapted to measure the intensity of force incurred by the touch.

The audio module 1670 may convert a sound into an electrical signal and vice versa. According to an embodiment, the audio module 1670 may obtain the sound via the input module 1650, or output the sound via the sound output module 1655 or a headphone of an external electronic device (e.g., an electronic device 1602) directly (e.g., wiredly) or wirelessly coupled with the electronic device 1601.

The sensor module 1676 may detect an operational state (e.g., power or temperature) of the electronic device 1601 or an environmental state (e.g., a state of a user) external to the electronic device 1601, and then generate an electrical signal or data value corresponding to the detected state. According to an embodiment, the sensor module 1676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1677 may support one or more specified protocols to be used for the electronic device 1601 to be coupled with the external electronic device (e.g., the electronic device 1602) directly (e.g., wiredly) or wirelessly. According to an embodiment, the interface 1677 may include, for example, a high definition multimedia interface (HDMI), a universal serial bus (USB) interface, a secure digital (SD) card interface, or an audio interface.

A connecting terminal 1678 may include a connector via which the electronic device 1601 may be physically connected with the external electronic device (e.g., the electronic device 1602). According to an embodiment, the connecting terminal 1678 may include, for example, an HDMI connector, a USB connector, an SD card connector, or an audio connector (e.g., a headphone connector).

The haptic module 1679 may convert an electrical signal into a mechanical stimulus (e.g., a vibration or a movement) or electrical stimulus which may be recognized by a user via his tactile sensation or kinesthetic sensation. According to an embodiment, the haptic module 1679 may include, for example, a motor, a piezoelectric element, or an electric stimulator.

The camera module 1680 may capture a still image or moving images. According to an embodiment, the camera module 1680 may include one or more lenses, image sensors, image signal processors, or flashes.

The power management module 1688 may manage power supplied to the electronic device 1601. According to an embodiment, the power management module 1688 may be implemented as at least part of, for example, a power management integrated circuit (PMIC).

The battery 1689 may supply power to at least one component of the electronic device 1601. According to an embodiment, the battery 1689 may include, for example, a primary cell which is not rechargeable, a secondary cell which is rechargeable, or a fuel cell.

The communication module 1690 may support establishing a direct (e.g., wired) communication channel or a wireless communication channel between the electronic device 1601 and the external electronic device (e.g., the electronic device 1602, the electronic device 1604, or the server 1608) and performing communication via the established communication channel. The communication module 1690 may include one or more communication processors that are operable independently from the processor 1620 (e.g., the application processor (AP)) and supports a direct (e.g., wired) communication or a wireless communication. According to an embodiment, the communication module 1690 may include a wireless communication module 1692 (e.g., a cellular communication module, a short-range wireless communication module, or a global navigation satellite system (GNSS) communication module) or a wired communication module 1694 (e.g., a local area network (LAN) communication module or a power line communication (PLC) module). A corresponding one of these communication modules may communicate with the external electronic device via the first network 1698 (e.g., a short-range communication network, such as Bluetooth^{™}, wireless-fidelity (Wi-Fi) direct, or infrared data association (IrDA)) or the second network 1699 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1692 may identify and authenticate the electronic device 1601 in a communication network, such as the first network 1698 or the second network 1699, using subscriber information (e.g., international mobile subscriber identity (IMSI)) stored in the subscriber identification module 1696.

The wireless communication module 1692 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1692 may support a high-frequency band (e.g., the mmWave band) to achieve, e.g., a high data transmission rate. The wireless communication module 1692 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1692 may support various requirements specified in the electronic device 1601, an external electronic device (e.g., the electronic device 1604), or a network system (e.g., the second network 1699). According to an embodiment, the wireless communication module 1692 may support a peak data rate (e.g., 20Gbps or more) for implementing eMBB, loss coverage (e.g., 1664dB or less) for implementing mMTC, or U-plane latency (e.g., 0.5ms or less for each of downlink (DL) and uplink (UL), or a round trip of 16ms or less) for implementing URLLC.

The antenna module 1697 may transmit or receive a signal or power to or from the outside (e.g., the external electronic device) of the electronic device 1601. According to an embodiment, the antenna module 1697 may include an antenna including a radiating element composed of a conductive material or a conductive pattern formed in or on a substrate (e.g., a printed circuit board (PCB)). According to an embodiment, the antenna module 1697 may include a plurality of antennas (e.g., array antennas). In such a case, at least one antenna appropriate for a communication scheme used in the communication network, such as the first network 1698 or the second network 1699, may be selected, for example, by the communication module 1690 (e.g., the wireless communication module 1692) from the plurality of antennas. The signal or the power may then be transmitted or received between the communication module 1690 and the external electronic device via the selected at least one antenna. According to an embodiment, another component (e.g., a radio frequency integrated circuit (RFIC)) other than the radiating element may be additionally formed as part of the antenna module 1697.

According to various embodiments, the antenna module 1697 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1601 and the external electronic device 1604 via the server 1608 coupled with the second network 1699. Each of the electronic devices 1602 or 1604 may be a device of a same type as, or a different type, from the electronic device 1601. According to an embodiment, all or some of operations to be executed at the electronic device 1601 may be executed at one or more of the external electronic devices 1602, 1604, or 1608. For example, if the electronic device 1601 should perform a function or a service automatically, or in response to a request from a user or another device, the electronic device 1601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1601. The electronic device 1601 may provide the outcome, with or without further processing of the outcome, as at least part of a reply to the request. To that end, a cloud computing, distributed computing, mobile edge computing (MEC), or client-server computing technology may be used, for example. The electronic device 1601 may provide ultra low-latency services using, e.g., distributed computing or mobile edge computing. In another embodiment, the external electronic device 1604 may include an internet-of-things (IoT) device. The server 1608 may be an intelligent server using machine learning and/or a neural network. According to an embodiment, the external electronic device 1604 or the server 1608 may be included in the second network 1699. The electronic device 1601 may be applied to intelligent services (e.g., smart home, smart city, smart car, or healthcare) based on 5G communication technology or IoT-related technology.

FIG. 17 is a block diagram 1700 illustrating the display module 1660 according to various embodiments. Referring to FIG. 17, the display module 1660 may include a display 1710 and a display driver integrated circuit (DDI) 1730 to control the display 1710. The DDI 1730 may include an interface module 1731, memory 1733 (e.g., buffer memory), an image processing module 1735, or a mapping module 1737. The DDI 1730 may receive image information that contains image data or an image control signal corresponding to a command to control the image data from another component of the electronic device 1601 via the interface module 1731. For example, according to an embodiment, the image information may be received from the processor 1620 (e.g., the main processor 1621 (e.g., an application processor)) or the auxiliary processor 1623 (e.g., a graphics processing unit) operated independently from the function of the main processor 1621. The DDI 1730 may communicate, for example, with touch circuitry 1750 or the sensor module 1676 via the interface module 1731. The DDI 1730 may also store at least part of the received image information in the memory 1733, for example, on a frame by frame basis. The image processing module 1735 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 1710. The mapping module 1737 may generate a voltage value or a current value corresponding to the image data pre-processed or post-processed by the image processing module 1735. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 1710 may be driven, for example, based at least in part on the voltage value or the current value such that visual information (e.g., a text, an image, or an icon) corresponding to the image data may be displayed via the display 1710.

According to an embodiment, the display module 1660 may further include the touch circuitry 1750. The touch circuitry 1750 may include a touch sensor 1751 and a touch sensor IC 1753 to control the touch sensor 1751. The touch sensor IC 1753 may control the touch sensor 1751 to sense a touch input or a hovering input with respect to a certain position on the display 1710. To achieve this, for example, the touch sensor 1751 may detect (e.g., measure) a change in a signal (e.g., a voltage, a quantity of light, a resistance, or a quantity of one or more electric charges) corresponding to the certain position on the display 1710. The touch circuitry 1750 may provide input information (e.g., a position, an area, a pressure, or a time) indicative of the touch input or the hovering input detected via the touch sensor 1751 to the processor 1620. According to an embodiment, at least part (e.g., the touch sensor IC 1753) of the touch circuitry 1750 may be formed as part of the display 1710 or the DDI 1730, or as part of another component (e.g., the auxiliary processor 1623) disposed outside the display module 1660.

According to an embodiment, the display module 1660 may further include at least one sensor (e.g., a fingerprint sensor, an iris sensor, a pressure sensor, or an illuminance sensor) of the sensor module 1676 or a control circuit for the at least one sensor. In such a case, the at least one sensor or the control circuit for the at least one sensor may be embedded in one portion of a component (e.g., the display 1710, the DDI 1730, or the touch circuitry 1750)) of the display module 1660. For example, when the sensor module 1676 embedded in the display module 1660 includes a biometric sensor (e.g., a fingerprint sensor), the biometric sensor may obtain biometric information (e.g., a fingerprint image) corresponding to a touch input received via a portion of the display 1710. As another example, when the sensor module 1676 embedded in the display module 1660 includes a pressure sensor, the pressure sensor may obtain pressure information corresponding to a touch input received via a partial or whole area of the display 1710. According to an embodiment, the touch sensor 1751 or the sensor module 1676 may be disposed between pixels in a pixel layer of the display 1710, or over or under the pixel layer.

As described above, an electronic device may include a sensor, a display, and at least one processor including processing circuitry. The at least one processor may be configured to display, on the display, a screen having a first color temperature, determine a second color temperature to be changed from the first color temperature according to data obtained from the sensor and indicating a color temperature of an environment around the electronic device, compare the second color temperature with a third color temperature determined using a usage time of day of the electronic device, change the color temperature of the screen displayed on the display from the first color temperature to the third color temperature, based on the second color temperature being higher than the third color temperature, and change the color temperature of the screen displayed on the display from the first color temperature to the second color temperature based on the second color temperature being lower than the third color temperature.

For example, the at least one processor may be configured to determine the third color temperature using the usage time of day measured from a time of day set according to a function for eye comfort.

For example, the at least one processor may be configured to determine the third color temperature using the usage time of day consecutively measured from the time of day set according to the function.

For example, the time of day may be earlier than a reference time from a bedtime of a user of the electronic device, which is determined using one or more software applications for user health stored in the memory.

For example, comparing the second color temperature with the third color temperature may be executed on a condition that a first function for adaptively changing a color temperature of the screen according to a change in a color temperature of an environment around the electronic device and a second function for eye comfort are activated in the electronic device.

For example, the sensor may include an illuminance sensor disposed under an active area of the display used for displaying the screen.

For example, the sensor may include a camera facing a direction of the active area of the display.

For example, the sensor may include a sensor dedicated for measuring a color temperature of an environment around the electronic device.

As described above, an electronic device may include a sensor configured to obtain data indicating a color temperature of an environment around the electronic device, an acceleration sensor, a display, and at least one processor. For example, the at least one processor may be configured to display, on the display, a screen having a first color temperature, recognize a moving speed of the electronic device using the acceleration sensor, maintain a color temperature of the screen at the first color temperature based on the moving speed faster than a reference speed, and change the color temperature of the screen from the first color temperature to a second color temperature determined according to the data based on the moving speed slower than the reference speed.

For example, the electronic device may include global navigation satellite system (GNSS) reception circuitry. For example, the at least one processor may be configured to recognize the moving speed by further using a signal received through the GPS reception circuitry.

For example, the at least one processor may be configured to refrain from determining the second color temperature according to the data, based on the moving speed faster than the reference speed.

For example, the at least one processor may be configured to maintain the color temperature of the screen at the first color temperature, independently of a change in the color temperature of the environment around the electronic device, based on the moving speed faster than the reference speed.

For example, the electronic device may include communication circuitry. For example, the at least one processor may be configured to receive step information of a user the electronic device from an external electronic device worn by the user through the communication circuitry, and recognize the moving speed by further using the step information.

As described above, an electronic device may include a sensor, a display, and at least one processor. The at least one processor may be configured to activate a function of adaptively changing a color temperature of a screen displayed on the display according to data obtained from the sensor and indicating a color temperature of an environment around the electronic device while displaying a first screen from a first software application stored in the memory on the display, detect an event for displaying a second screen from a second software application stored in the memory on the display, change the screen displayed on the display from the first screen to the second screen based on the event, and deactivate the function while displaying the second screen on the display.

For example, a color temperature of the first screen may be changed in accordance with a change in the color temperature of the environment around the electronic device according to activating the function, and a color temperature of the second screen may be maintained independently of the change in the color temperature of the environment around the electronic device according to deactivating the function.

For example, the color temperature of the second screen may be maintained as a color temperature designated for the second software application.

For example, the second software application may include a software application for a navigation service, a software application for image editing, or a combination thereof.

As described above, an electronic device may include communication circuitry, a display, and at least one processor. The at least one processor may be configured to display, on the display, a screen having a first color temperature, discover, through the communication circuitry, an external electronic device in conjunction with the electronic device based on a user account of the electronic device, while displaying the screen having the first color temperature, request, to the external electronic device through the communication circuitry, a color temperature of an environment around the external electronic device based on the discovery of the external electronic device, receive, through the communication circuitry, data transmitted from the external electronic device in response to the request and indicating the color temperature of the environment around the external electronic device, determine a second color temperature to be changed from the first color temperature according to the data, and change a color temperature of the screen displayed on the display from the first color temperature to the second color temperature.

For example, the at least one processor may be configured to receive a signal broadcasted from the external electronic device before discovering the external electronic device, execute the request based on a reception strength of the signal being greater than a reference reception strength, and refrain from executing the request based on the reception strength being smaller than the reference reception strength.

As described above, an electronic device may include a display and at least one processor. The at least one processor may be configured to display, on the display, a screen according to a function for eye comfort, receive an input indicating to deactivate the function applied to a portion of the screen displayed on the display, and change a color temperature of the portion of the screen and maintain a color temperature of a remaining portion of the screen based on the input.

For example, the screen may include an image. For example, the at least one processor may be configured to change the color temperature of the portion of the screen including the image and maintain the color temperature of the remaining portion of the screen, based on the input, which is a touch input maintained on the image for a reference time.

For example, the at least one processor may be configured to, based on checking an image included in the screen, display an executable object floated on the screen in response to displaying the screen on the display according to the function, and change the color temperature of the portion of the screen and maintain the color temperature of the remaining portion of the screen based on receiving the input on the executable object.

For example, the at least one processor may be configured to maintain displaying the executable object floated on the screen before a timeout of the executable object and cease displaying the executable object floated on the screen in response to the timeout of the executable object.

For example, the at least one processor may be configured to change the color temperature of the portion of the screen and maintain the color temperature of the remaining portion of the screen, by applying, to the portion of the screen based on the input, an inverse function of a function used to determine the color temperature of the portion of the screen according to the function before the input is received.

As described above, an electronic device may include communication circuitry, a display, and at least one processor. For example, the at least one processor may be configured to obtain information on a sunrise time and information on a sunset time using a location of the electronic device determined through the communication circuitry, according to a function for eye comfort, and change a color temperature of a screen displayed on the display over time within a time interval from the sunset time to the sunrise time.

For example, the at least one processor may be configured to change the color temperature by further using weather information received through the communication circuitry.

For example, the at least one processor may be configured to determine whether the electronic device is located indoors using the communication circuitry, deactivate using the weather information to change the color temperature based on the electronic device being located indoors, and activate using the weather information to change the color temperature based on the electronic device being located outdoor.

As described above, an electronic device may include a display visible from a front side of the electronic device, a first sensor facing a first direction toward which the display faces and visible from the front side of the electronic device, a second sensor facing a second direction opposite to the first direction and visible from a rear side of the electronic device, and at least one processor. The at least one processor may be configured to obtain first data regarding ambient light around the electronic device using the first sensor, obtain second data regarding ambient light around the electronic device using the second sensor, obtain third data regarding light emitted from the display according to displaying a screen on the display, provide a color temperature of the screen as a first color temperature determined by processing the first data, the second data, and the third data using first reference data stored in the memory, and provide the color temperature as a second color temperature determined by processing the first data, the second data, and the third data using second reference data stored in the memory, based on checking that a reference time has elapsed from providing the color temperature as the first color temperature. The first reference data and the second reference data may respectively include information on weights applied to each of the first data, the second data, and the third data.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1640) including one or more instructions that are stored in a storage medium (e.g., internal memory 1636 or external memory 1638) that is readable by a machine (e.g., the electronic device 1601). For example, a processor (e.g., the processor 1620) of the machine (e.g., the electronic device 1601) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
memory storing instructions;
a sensor;
a display; and
at least one processor,
wherein the instructions, when executed by the at least one processor individually or collectively, cause the electronic device to:
display, on the display, a screen having a first color temperature;
determine a second color temperature to be changed from the first color temperature, in accordance with data, obtained from the sensor, indicating a color temperature of an environment around the electronic device;
compare the second color temperature with a third color temperature determined using a usage time of day of the electronic device;
based on the second color temperature being higher than the third color temperature, change a color temperature of the screen displayed on the display from the first color temperature to the third color temperature; and
based on the second color temperature being lower than the third color temperature, change the color temperature of the screen displayed on the display from the first color temperature to the second color temperature.

2. The electronic device of claim 1, wherein the instructions, when executed by the at least one processor individually or collectively, cause the electronic device to:
determine the third color temperature using the usage time measured from a time of day set in accordance with a function for eye comfort.

3. The electronic device of claim 2, wherein the instructions, when executed by the at least one processor individually or collectively, cause the electronic device to:
determine the third color temperature using the usage time consecutively measured from a time of day set in accordance with the function.

4. The electronic device of claim 2, wherein the time of day is before a reference time from a sleeping time of a user of the electronic device determined using one or more software applications, for user health, stored in the memory.

5. The electronic device of claim 1, wherein comparing the second color temperature with the third color temperature is executed on a condition that a first function for adaptively changing a color temperature of the screen in accordance with a change in color temperature of an environment around the electronic device and a second function for eye comfort are activated in the electronic device.

6. The electronic device of claim 1, wherein the sensor comprises an illuminance sensor disposed under an active area of the display used for display of the screen.

7. The electronic device of claim 1, wherein the sensor comprises a camera facing in a direction of the active area of the display.

8. The electronic device of claim 1, wherein the sensor comprises a sensor dedicated for measuring a color temperature of an environment around the electronic device.

9. A method executed in an electronic device with a sensor and a display, the method comprising:
displaying, on the display, a screen having a first color temperature;
determining a second color temperature to be changed from the first color temperature, in accordance with data, obtained from the sensor, indicating a color temperature of an environment around the electronic device;
comparing the second color temperature with a third color temperature determined using a usage time of day of the electronic device;
based on the second color temperature being higher than the third color temperature, changing a color temperature of the screen displayed on the display from the first color temperature to the third color temperature; and
based on the second color temperature being lower than the third color temperature, changing the color temperature of the screen displayed on the display from the first color temperature to the second color temperature.

10. The method of claim 9, further comprising:
determining the third color temperature using the usage time measured from a time of day set in accordance with a function for eye comfort.

11. The method of claim 10, further comprising:
determining the third color temperature using the usage time consecutively measured from a time of day set in accordance with the function.

12. The method of claim 10, wherein the time of day is before a reference time from a sleeping time of a user of the electronic device determined using one or more software applications, for user health, stored in the memory.

13. The method of claim 9, wherein comparing the second color temperature with the third color temperature is executed on a condition that a first function for adaptively changing a color temperature of the screen in accordance with a change in color temperature of an environment around the electronic device and a second function for eye comfort are activated in the electronic device.

14. A non-transitory computer readable storage medium storing one or more programs, the one or more programs including instructions to, when executed by an electronic device with a sensor and a display, cause the electronic device to:
display, on the display, a screen having a first color temperature;
determine a second color temperature to be changed from the first color temperature, in accordance with data, obtained from the sensor, indicating a color temperature of an environment around the electronic device;
compare the second color temperature with a third color temperature determined using a usage time of day of the electronic device;
based on the second color temperature being higher than the third color temperature, change a color temperature of the screen displayed on the display from the first color temperature to the third color temperature; and
based on the second color temperature being lower than the third color temperature, change the color temperature of the screen displayed on the display from the first color temperature to the second color temperature.

15. The computer readable storage medium of claim 14, wherein the one or more programs include instructions to, when executed by the electronic device, cause the electronic device to:
determine the third color temperature using the usage time measured from a time of day set in accordance with a function for eye comfort.
